# EUROPÄISCHE PATENTSCHRIFT

(11) **EP 3 632 055 B1**
(45) Veröffentlichungstag und Bekanntmachung des Hinweises auf die Patenterteilung: **07.07.2021**
(21) Anmeldenummer: 18725512.0
(22) Anmeldetag: 17.05.2018
(51) Int. Cl.: H04L 12/423, H04L 12/40, H04L 12/42

(54) **ÜBERTRAGEN VON DATEN AUF EINEM LOKALBUS**
TRANSMISSION OF DATA ON A LOCAL BUS
TRANSMISSION DE DONNÉES SUR UN BUS LOCAL

(30) Priorität: 24.05.2017 DE 102017208825
(43) Veröffentlichungstag der Anmeldung: 08.04.2020
(73) Patentinhaber: WAGO Verwaltungsgesellschaft mbH, 32423 Minden (DE)
(72) Erfinder: JEROLM, Daniel, 49152 Bad Essen (DE)
(74) Vertreter: Daum, Patrick
(86) Internationale Anmeldenummer: PCT/EP2018/062956
(87) Internationale Veröffentlichungsnummer: WO 2018/215298

(56) Entgegenhaltungen:
- EP-A1- 1 832 946
- EP-A2- 1 585 266
- DE-A1- 10 206 904

## Beschreibung

### 1. Gebiet der Erfindung

Die Erfindung betrifft im Allgemeinen das Übertragen von Daten auf einem Lokalbus.

### 2. Stand der Technik

Prozessdaten und Managementdaten werden zumeist im Kontext von Automatisierungsanlagen verwendet sind aber nicht darauf beschränkt.

Automatisierungsanlagen werden insbesondere zur Steuerung von industriellen Anlagen, Gebäuden sowie von Verkehrsmitteln eingesetzt. Für die Steuerung einer Automatisierungsanlage sind zumeist mehrere Sensoren und Aktoren notwendig. Diese überwachen und steuern den von der Anlage ausgeführten Prozess. Die unterschiedlichen Sensoren und Aktoren einer Automatisierungsanlage werden dabei häufig auch als Automatisierungsgeräte bezeichnet.

Diese Automatisierungsgeräte können entweder direkt mit einer Steuerung der Automatisierungsanlage verbunden werden, oder können zunächst mit Ein- und Ausgangsmodulen, die häufig auch als E/A-Module bezeichnet werden, verbunden werden. Diese können dann wiederum direkt mit der Steuerung verbunden werden. Die Automatisierungsgeräte können dabei entweder direkt in den E/A-Modulen integriert sein oder können mit diesen über Kabel oder kabellos verbunden sein.

Die Steuerung einer Automatisierungsanlage wird in der Regel mit Hilfe einer oder mehrerer speicherprogrammierbaren Steuerungen, SPS, bewerkstelligt. Die SPSen können dabei hierarchisch oder dezentral in einer Automatisierungsanlage angeordnet sein. Dabei gibt es bei den SPS unterschiedliche Leistungsklassen, so dass diese je nach Rechen- und Speicherkapazität unterschiedliche Steuerungen und Regelungen übernehmen können. Eine SPS hat im einfachsten Fall Eingänge, Ausgänge, ein Betriebssystem (Firmware) und eine Schnittstelle, über die ein Anwenderprogramm geladen werden kann. Das Anwenderprogramm legt fest, wie die Ausgänge in Abhängigkeit von den Eingängen geschaltet werden sollen. Dabei können die Eingänge und Ausgänge mit den Automatisierungsgeräten und/oder den E/A-Modulen verbunden werden und anhand der im Anwenderprogramm hinterlegten Logik kann der Prozess, der von der Automatisierungsanlage durchgeführt wird, überwacht beziehungsweise gesteuert werden. Dabei wird die Überwachung des Prozesses durch die Sensoren bewerkstelligt und die Steuerung des Prozesses durch die Aktoren. Die Steuerung kann auch als zentrale Steuerung oder Zentraleinheit bezeichnet werden und übernimmt zumindest für ein mit der Steuerung verbundenes Automatisierungsgerät oder E/A-Modul die Steuerung.

Allerdings ist das direkte Verbinden der Automatisierungsgeräte mit der zumindest einen Steuerung oder der E/A-Module mit der zumindest einen Steuerung in Form einer parallelen Verdrahtung, d.h. von jedem Automatisierungsgerät oder jedem E/A-Modul wird je eine Leitung zur übergeordneten Steuerung verlegt, sehr aufwendig. Gerade bei steigendem Automatisierungsgrad einer Automatisierungsanlage wächst der Verkabelungsaufwand bei paralleler Verdrahtung. Dies ist mit großem Aufwand bei der Projektierung, Installation, Inbetriebnahme und Wartung verbunden.

Daher werden heutzutage in der Automatisierungstechnik zumeist Bussysteme eingesetzt, mit denen die Automatisierungsgeräte beziehungsweise die E/A-Module an die Steuerung angeschlossen werden können. Derartige Teilnehmer eines Bussystems werden auch als Busteilnehmer bezeichnet. Weil auf dem Bussystem Daten ausgetauscht werden, werden die Busteilnehmer auch häufig als Datenbusteilnehmer bezeichnet. Um die Anbindung der einzelnen Automatisierungsgeräte beziehungsweise der E/A-Module mit dem Bussystem noch weiter zu vereinfachen, werden heutzutage häufig einzelne Gruppen von Automatisierungsgeräten beziehungsweise E/A-Modulen mit Hilfe eines spezialisierten Lokalbusses zunächst untereinander zu einem Lokalbussystem verbunden und anschließend wird zumindest ein Teilnehmer dieses Lokalbusses mit dem Bussystem verbunden, welches mit der Steuerung verbunden ist. Dabei kann sich das Lokalbussystem von dem Bussystem unterscheiden, welches eingesetzt wird, um die Verbindung mit der Steuerung zu realisieren.

Der mit dem Bussystem der Steuerung verbundene Teilnehmer einer Gruppe von Lokalbusteilnehmern wird häufig auch als Lokalbusmaster bezeichnet. Alternativ wird auch die Bezeichnung Kopfstation des Lokalbussystems verwendet. Dieser Lokalbusmaster kann gegenüber anderen Lokalbusteilnehmer weitere Logiken, Schaltungen oder Funktionalitäten beinhalten, die zur Anbindung an das Bussystem der Steuerung notwendig sind. Auch kann der Lokalbusmaster selbst eine SPS beinhalten. Auch kann dieser Teilnehmer Logiken und Schaltungen zur Umsetzung zwischen den zwei Bussystemen aufweisen. Der Lokalbusmaster kann daher auch als Gateway oder Busumsetzer ausgebildet sein und sorgt für eine Umsetzung der im Format des einen Bussystems vorliegenden Daten in das Format des Lokalbussystems und umgekehrt. Zumeist aber nicht zwingend, ist der Lokalbusmaster auf die Anbindung des Lokalbusses an den übergeordneten Bus spezialisiert.

Die zum Einsatz kommenden Lokalbusse sind zumeist auf die speziellen Einsatzerfordernisse der Automatisierungsgeräte beziehungsweise E/A-Module abgestimmt oder berücksichtigen deren spezielle Hardwareausgestaltung. Dabei bilden die Gruppen an Automatisierungsgeräten beziehungsweise E/A-Modulen des Lokalbussystems zumeist eine Untergruppe der Automatisierungsanlage zur Ausführung einer speziellen Aufgabe in dem von der Automatisierungsanlage ausgeführten Prozess. Die auf den Bussen ausgetauschten Daten für den Prozess werden auch häufig als Lokalbusdaten oder Prozessdaten bezeichnet, weil diese Daten Informationen zur Regelung beziehungsweise Steuerung des von der Automatisierungsanlage ausgeführten Prozesses beinhalten. Diese Daten können dabei unter anderem Messdaten, Steuerungsdaten, Zustandsdaten und/oder andere Informationen umfassen, die Regelungen oder Steuerungen an den Datenbusteilnehmern innerhalb einer genau definierten Zeitspanne oder eines genau definierten Zeitpunktes hervorrufen. Entsprechend des verwendeten Busprotokolls können diesen Daten andere Daten vorangestellt *(engl.* Header) oder angehängt *(engl.* Trailer) sein. Diese anderen Daten können Informationen bezüglich der Daten beinhalten, oder Informationen bezüglich einer internen Kommunikation auf dem Lokalbus beinhalten. Hierbei ist eine Vielzahl von unterschiedlichen Informationen bekannt, die entsprechend des verwendeten Busprotokolls den Daten vorangestellt oder angefügt werden können. Weiterhin gibt es Daten, die eine Steuerung, Regelung oder Programmierung der Datenbusteilnehmer außerhalb einer definierten Zeitspanne oder außerhalb eines genau definierten Zeitpunktes hervorrufen. Prozessdaten können im Kontext der Automatisierungsanlagen auch häufig als zyklische Daten bezeichnet werden, weil der Prozess der in der Automatisierungsanlage gesteuert bzw. geregelt wird auf zyklische Prozessdaten angewiesen ist, die den Datenbusteilnehmern erlauben Steuerungen und / oder Regelungen der beispielsweise an den Datenbusteilnehmern angeschlossenen Aktoren und Sensoren zu bewerkstelligen. Im Gegensatz hierzu werden Managementdaten dazu verwendet die Datenbusteilnehmer zu programmieren oder beispielsweise deren Fehlermeldungen, Status etc., abzufragen.

Ein Ringbus ist dabei eine spezialisierte Form eines Lokalbusses, wie zum Beispiel aus US 5,472,347 A bekannt. In einem Ringbus sind die Datenbusteilnehmer, zum Beispiel die Automatisierungsgeräte beziehungsweise E/A-Module, jeweils mit ihren direkt benachbarten Datenbusteilnehmern verbunden und Daten werden der Reihe nach von einem zum anderen Datenbusteilnehmer weitergeleitet. Die auf dem Lokalbus übertragenen Daten können auch als Lokalbusdaten bezeichnet werden. Es werden also nicht allen Datenbusteilnehmern gleichzeitig die Daten zugesandt, sondern der Reihe nach, wobei ein Datenbusteilnehmer von seinem vorgelagerten Datenbusteilnehmer Daten erhält und Daten an seinen nachgelagerten Datenbusteilnehmer weiterleitet. Zwischen dem Erhalt der Daten und der Weiterleitung kann der Datenbusteilnehmer die erhaltenen Daten verarbeiten. Wenn die Daten den letzten Datenbusteilnehmer in der Reihe erreicht haben, so werden die Daten vom letzten Datenbusteilnehmer wieder der Reihe nach zurück an den ersten Datenbusteilnehmer zurückgeleitet. Das Zurückleiten kann dabei entweder durch alle Datenbusteilnehmer geschehen oder an diesen vorbei mit Hilfe einer Bypassleitung. Der Ringbus hat also einen Abwärtsstrom und Aufwärtsstrom von Daten. Die Daten in einem Ringbus werden meist in Form von Datenpaketen übertragen, die alle Datenbusteilnehmer durchlaufen.

In einem Ringbus wird das Datenpaket von einem zum anderen Datenbusteilnehmer weitergegeben, wie zum Beispiel in EP 1585 266 A1 beschrieben. Dabei empfängt zu jeder gegebenen Zeit ein Datenbusteilnehmer von seinem vorgelagerten Datenbusteilnehmer immer nur einen Teil des Datenpakets. Wenn die in diesem Teil enthaltenen Daten vom Datenbusteilnehmer verarbeitet worden sind, wird der Teil an den nachgelagerten Datenbusteilnehmer weitergeleitet und gleichzeitig wird von dem vorgelagerten Datenbusteilnehmer ein neuer Teil des Datenpakets empfangen. Auf diese Weise passieren alle Teile des Datenpakets sequentiell alle Datenbusteilnehmer.

Aufgabe der vorliegenden Erfindung ist es ein Verfahren sowie einen Lokalbusmaster zum verbesserten Zeitmanagement in Ringbussystemen bereitzustellen.

### 3. Zusammenfassung der Erfindung

Diese Aufgabe wird mit einem Verfahren und einem Lokalbusmaster entsprechend der unabhängigen Ansprüche gelöst. Vorteilhafte Ausführungsformen sind in den Unteransprüchen beschrieben.

Ein erfindungsgemäßes Verfahren zum Betrieb eines Lokalbusses mit Datenbusteilnehmern ist beschrieben, wobei der Lokalbus insbesondere ein Ringbus ist. Das Verfahren weist dabei den Schritt des Übertragens einer ersten Kennung eines Zyklusrahmens auf, wobei die erste Kennung den Beginn des Zyklusrahmens definiert. Ein Zyklusrahmen kann dabei beispielsweise ein wiederkehrendes (zyklisches) vorzugsweise äquidistantes Zeitintervall sein, innerhalb dessen Daten auf dem Lokalbus übertragbar sind. Der Zyklusrahmen weist dabei beispielsweise zumindest eine erste Kennung auf, die auch als Startkennung SOC (*engl.* Start Of Cycle) bezeichnet werden kann, und die mit einer folgenden ersten Kennung einen Zeitbereich zur Übertragung der Daten definiert. Mehrere erste Kennungen aufeinander folgender Zyklusrahmen sind dabei vorteilhafterweise in einem zeitlich äquidistanten Abstand zueinander. Die erste Kennung kann dabei ein eindeutiges Bitmuster SOC enthalten. Wenn dieses Bitmuster von den Datenbusteilnehmern erkannt wird, so wissen diese, dass ein Zyklusrahmen begonnen hat, d.h. in bestimmten zeitlichen Abständen zum SOC Prozessdaten folgen werden und in nicht bestimmten Abständen zum SOC Managementdaten folgen. Zeitlich kann sich im Kontext der Erfindung auf die absolute Zeit beziehen oder auf entsprechende Arbeitstakte.

Das erfindungsgemäße Verfahren weist weiter den Schritt des Übertragens von den Prozessdaten und Managementdaten über den Lokalbus auf, wobei die Prozessdaten und Managementdaten innerhalb des Zyklusrahmens übertragen werden. Die Prozessdaten werden an den Datenbusteilnehmern verwendet, um eine Steuerung und / oder Regelung eines Prozesses hervorzurufen. Sie steuern beispielsweise die Sollwerte für an die Datenbusteilnehmer angeschlossene Aktoren, oder regeln Grenzwerte für aufgenommene Sensorwerte. Die Managementdaten weisen Daten auf, die zum Management der Datenbusteilnehmer verwendet werden, also beispielsweise die Programmierung der Datenbusteilnehmer beinhalten oder beispielweise Zustände abfragen. Managementdaten können aber auch zur Initialisierung des Lokalbusses verwendet werden, um den Datenbusteilnehmern beispielsweise Adressen zuzuweisen oder deren Adressen abzufragen. Managementdaten enthalten vorzugsweise keine Prozessdaten.

In dem erfindungsgemäßen Verfahren wird in einem ersten zeitlichen Abstand zur ersten Kennung, zumindest ein isochrones Datenpaket übertragen, welches die Prozessdaten beinhaltet, und wenn innerhalb des Zyklusrahmens Managementdaten übertragen werden sollen, so werden diese Managementdaten disjunkt zu den Prozessdaten übertragen. D.h. die Managementdaten werden nicht in dem zumindest einen isochronen Datenpaket zusammen mit den Prozessdaten übertragen, sehr wohl aber innerhalb des gleichen Zyklusrahmens. Dabei werden Managementdaten und Prozessdaten nicht gemischt.

Mit anderen Worten, zunächst wird die erste Kennung von dem Lokalbusmaster auf den Lokalbus gesendet. Der erste Datenbusteilnehmer empfängt die erste Kennung und hat Kenntnis darüber, dass ein Zyklusrahmen beginnt. Der erste Datenbusteilnehmer sendet dann nach einer vorzugsweise definierten vorher bestimmten oder festgelegten Zeit - z.B. zwölf Takte - die erste Kennung weiter an den nachfolgenden Datenbusteilnehmer usw. Die erste vorbestimmte Zeit ist daher beispielsweise die bestimmte oder feste Verzögerung durch einen Datenbusteilnehmer zur Weiterleiterleitung jedes Symbols an den folgenden Datenbusteilnehmer. D.h. es kann gesagt werden, die erste Kennung wird auf dem Lokalbus übertragen, weil diese erste Kennung alle Datenbusteilnehmer des Lokalbusses durchläuft. In einem ersten zeitlichen Abstand zur ersten Kennung sendet der Lokalbusmaster das erste Symbol des zumindest einen isochronen Datenpakets. Auch dieses Symbol wird von dem ersten Datenbusteilnehmer empfangen und nach einer definierten vorher bestimmten oder festen Zeit an den jeweils nachfolgenden Datenbusteilnehmer weitergeleitet usw. Das gleiche geschieht mit den weiteren Symbolen des zumindest einen isochronen Datenpakets. D.h. es kann gesagt werden, dass das zumindest eine isochrone Datenpaket auf dem Lokalbus übertragen wird, weil alle Teile des zumindest einen isochronen Datenpakets alle Datenbusteilnehmer durchlaufen.

Ist die definierte vorher bestimmte Zeit an allen Datenbusteilnehmern konstant, so bleibt auch der zeitliche Abstand zwischen der ersten Kennung und dem ersten Symbol des zumindest einen isochronen Datenpakets immer gleich. Hierbei kann auch gesagt werden, die erste Kennung und die Teile des zumindest einen isochronen Datenpakets durchlaufen den Lokalbus, also die Datenbusteilnehmer mit einer konstanten Geschwindigkeit. Disjunkt zu dem zumindest einen isochronen Datenpaket sendet der Lokalbusmaster Managementdaten, diese können also entweder zeitlich gesehen vor dem zumindest einen isochronen Datenpaket gesendet werden oder nach dem zumindest einen isochronen Datenpaket, sofern das isochrone Datenpaket nicht an die erste Kennung oder an eine folgende erste Kennung grenzt. Auch die Managementdaten werden von den Datenbusteilnehmern empfangen und nach einer definierten vorher bestimmten Zeit an den jeweils nachfolgenden Datenbusteilnehmer weitergeleitet usw. D.h. es kann gesagt werden, dass die Managementdaten auf dem Lokalbus übertragen werden.

Bedingt dadurch, dass Prozessdaten und Managementdaten zusammen innerhalb eines Zyklusrahmens übertragen werden, ergibt sich der Vorteil, dass die Kommunikation mit den Datenbusteilnehmern nicht unterbrochen werden muss, wenn zwischen isochronen Prozessdaten und Managementdaten gewechselt wird. Es ist des Weiteren auch möglich, die Programmierung der Datenbusteilnehmer für beispielsweise jedes isochrone Datenpaket zu ändern, nämlich dadurch, dass dem isochronen Datenpaket Managementdaten vorangestellt werden. Durch das Übertragen von isochronen Prozessdaten und Managementdaten innerhalb eines Zyklusrahmens ohne Unterbrechung der Kommunikation kann ein bestmöglichstes Zeitmanagement gewährleistet werden.

Das zumindest eine isochrone Datenpaket weist eine zweite Kennung auf, die unterschiedlich ist zur ersten Kennung. Diese Kennung des isochronen Datenpakets kann ein eineindeutiges Bitmuster IDE sein. Die Datenbusteilnehmer wissen, dass wenn dieses Bitmuster auftritt, isochrone Daten also Prozessdaten folgen. Der Lokalbusmaster kann angepasst sein, diese zweite Kennung in dem ersten zeitlichen Abstand von der ersten Kennung auf den Lokalbus zu senden gefolgt von den Prozessdaten. Die zweite Kennung und die Prozessdaten werden jeweils von den Datenbusteilnehmern empfangen und zu einer definierten vorher bestimmten oder festen Zeit weitergeleitet an den jeweils nachfolgenden Datenbusteilnehmer usw., so dass auf diese Weise das isochrone Datenpaket auf dem Lokalbus übertragen wird.

Die Managementdater werden in zumindest einem asynchronen Datenpaket übertragen. Ein asynchrones Datenpaket wird nur bei Bedarf, also bei anstehenden zu übertragenden Managementdaten übertragen. Liegen keine Managementdaten zur Übertragung an, werden innerhalb eines Zyklusrahmens keine asynchronen Datenpakete übertragen. Ein Datenpaket wird dann asynchron übertragen, wenn es von Zyklusrahmen zu nachfolgenden Zyklusrahmen nicht zwingend immer in demselben zeitlichen Abstand zur ersten Kennung ist. Isochrone Datenpakete müssen demgegenüber innerhalb jedes Zyklusrahmens immer in demselben zeitlichen Abstand zur ersten Kennung übertragen werden. Sowohl isochrone Datenpakete als auch asynchrone Datenpakete sind vorzugsweise an einem Taktsignal des Lokalbusses ausgerichtet.

Das asynchrone Datenpaket weist eine dritte Kennung auf, die verschieben ist zur ersten Kennung, also der Kennung die den Beginn eines Zyklusrahmens anzeigt und der zweiten Kennung, also der Kennung, die ein isochrones Datenpaket anzeigt. Die dritte Kennung kann dabei ebenfalls ein zugehöriges Bitmuster sein, welches den Datenbusteilnehmern bekannt ist, so dass diese bei Erhalt der dritten Kennung wissen, dass ein asynchrones Datenpaket vorliegt und dass dementsprechend der dritten Kennung asynchrone Daten also Managementdaten folgen. Der Lokalbusmaster kann angepasst sein, diese dritte Kennung auf den Lokalbus zu senden. Die dritte Kennung und die Managementdaten werden jeweils von den Datenbusteilnehmern empfangen und zu einer definierten vorher bestimmten oder festen Zeit weitergeleitet an den jeweils nachfolgenden Datenbusteilnehmer usw., so dass auf diese Weise das asynchrone Datenpaket auf dem Lokalbus übertragen wird.

In einer bevorzugten Ausführungsform des erfindungsgemäßen Verfahrens weist dieses weiter den Schritt des Ermittelns des ersten zeitlichen Abstandes auf. D.h. es wird ermittelt, wie viel Zeit zwischen dem Senden der ersten Kennung und dem Senden des ersten Symbols des zumindest einen isochronen Datenpakets liegt. Der erste zeitliche Abstand wird vorzugsweise basierend auf der Anzahl der Datenbusteilnehmer und einer vorgegebenen oder errechneten Verzögerung der Übertragung der Prozessdaten bestimmt.

Das Ermitteln kann dabei beispielsweise von dem Lokalbusmaster bewerkstelligt werden. Der erste zeitliche Abstand gibt vorzugsweise an, welche Zeit zwischen dem Senden der ersten Kennung und dem Senden der zweiten Kennung liegt. Wenn alle Datenbusteilnehmer angepasst sind, das jeweilige empfangene Symbol nur für eine konstante Zeit vorliegen zu haben und anschließend an den nachfolgenden Datenbusteilnehmer weiterzuleiten, so bleibt dieser zeitliche Abstand zwischen dem Senden bzw. Weiterleiten der ersten Kennung und dem Senden bzw. Weiterleiten der zweiten Kennung gleich.

Wie viel Zeit zwischen dem Senden der ersten Kennung und dem Senden des ersten Symbols des zumindest einen isochronen Datenpakets verstreichen darf richtet sich in einer vorteilhaften Ausgestaltung danach, wann die im isochronen Datenpaket enthaltenen Prozessdaten an den Datenbusteilnehmern vorliegen müssen, um eine Steuerung und / oder Regelung durchzuführen. Insbesondere kann eine möglichst geringe Latenz gefordert sein. Der Lokalbusmaster kann beispielsweise Kenntnis darüber haben, wann die Prozessdaten an den jeweiligen Datenbusteilnehmern vorliegen müssen, so dass alle Datenbusteilnehmer gleichzeitig oder zumindest innerhalb einer beschränkten Zeitspanne Steuerungen und /oder Regelungen durchführen können. Aus dieser Kenntnis und der Kenntnis wie viel Zeit es benötigt das isochrone Datenpaket zu übertragen, was abhängig ist von der Anzahl an Datenbusteilnehmern, kann der Lokalbusmaster ermitteln, wann das zumindest eine isochrone Datenpaket übertragen werden muss, bzw. wann das erste Symbol des zumindest einen isochronen Datenpakets gesendet werden muss, so dass alle Datenbusteilnehmer rechtzeitig ihre jeweiligen Prozessdaten vorliegen haben. Dem Fachmann ist dabei bewusst, dass das Vorliegen der Prozessdaten an den jeweiligen Datenbusteilnehmern auch abhängig ist von der Verteilung der Prozessdaten innerhalb des zumindest einen isochronen Datenpakets.

Der Lokalbusmaster kann dabei angepasst sein, den ermittelten zeitlichen Abstand zu speichern. Des Weiteren kann der Lokalbusmaster angepasst sein, den gleichen zeitlichen Abstand so lange zu verwenden, bis sich die Konfiguration des Lokalbusses wieder ändert, d.h. bis Datenbusteilnehmer hinzugefügt oder entfernt werden. Der Lokalbusmaster kann dabei derart angepasst sein, dass dieser den zeitlichen Abstand ermittelt, wenn der Lokalbus das erste Mal initialisiert wird. Auch kann der Lokalbusmaster angepasst sein nach der Initialisierung den zeitlichen Abstand in festen zeitlichen Abständen zu überprüfen oder getriggert durch eine Konfigurationsänderung des Lokalbusses. Der erste zeitliche Abstand kann alternativ durch ein externes Programm beispielweise auf einem Desktop-PC oder auf der über einen Feldbus angebundenen SPS berechnet werden.

Der Zeitpunkt an dem die Prozessdaten den Datenbusteilnehmern vorliegen müssen kann auch als Ausgabezeitpunkt bezeichnet werden, weil zu diesem Zeitpunkt die Prozessdaten an den Ausgängen der Datenbusteilnehmer ausgegeben werden. Durch die Ausgabe der Prozessdaten an den Ausgängen der Datenbusteilnehmer können beispielsweise Aktoren gesteuert oder geregelt werden. Dieser Ausgabezeitpunkt kann fix vorgegeben sein und einen zweiten zeitlichen Abstand von der ersten Kennung haben. Dabei definiert der zweite zeitliche Abstand die Zeit die verstreicht, zwischen dem Senden der ersten Kennung durch den Lokalbusmaster und dem Ausgabezeitpunkt. Der zweite zeitliche Abstand ist dabei für jeden Datenbusteilnehmer unterschiedlich. Der zweite zeitliche Abstand wird dabei für jeden Datenbusteilnehmer in Abhängigkeit von der Position des Datenbusteilnehmers im Lokalbus bestimmt. Vorzugsweise wird jedem Datenbusteilnehmer sein individueller zweiter zeitlicher Abstand mittels der Managementdaten mitgeteilt.

In einer weiteren Ausgestaltung erfolgt die Vorgabe des Ausgabezeitpunkts mit Hilfe einer absoluten Zeitangabe. Die Datenbusteilnehmer arbeiten in diesem Fall alle mit einer gemeinsamen Zeitbasis. Beispielsweise sind alle auf einen Zeitgeber synchronisiert. Gemäß einer vorteilhaften Ausgestaltung enthält die erste Kennung einen Zeitstempel, der von den Datenbusteilnehmern ausgewertet wird, um beispielweise ihre eigene Zeitbasis zu korrigieren.

Entsprechend eines festgelegten Ausgabezeitpunktes, kann es auch einen festgelegten Eingabezeitpunkt geben, der eine Eingabe von Prozessdaten an den Eingängen der Datenbusteilnehmer festlegt. Dieser Eingabezeitpunkt kann beispielsweise der Zeitpunkt sein, an dem die Datenbusteilnehmer von den mit den Datenbusteilnehmern verbundenen Sensoren Werte aufnehmen. Der Eingabezeitpunkt kann dabei einen dritten zeitlichen Abstand vom Senden der ersten Kennung entfernt sein. Die aufgenommenen Werte können ebenfalls Prozessdaten darstellen und können mit Hilfe eines weiteren isochronen Datenpakets innerhalb des Zyklusrahmens von den Datenbusteilnehmern abgefragt werden, so dass der Lokalbusmaster die entsprechenden Prozessdaten an eine übergeordnete Steuerung weiterleiten kann. Der Lokalbusmaster kann dabei beispielsweise derart angepasst sein, ein weiteres isochrones Datenpakt auf dem Lokalbus zu senden, und zwar mit einem vierten zeitlichen Abstand zur ersten Kennung, wobei der vierte zeitliche Abstand ermittelt wird basierend auf dem Eingabezeitpunkt an den Datenbusteilnehmern, so dass das weitere isochrone Datenpaket, bzw. Teile des isochronen Datenpaktes an den Datenbusteilnehmern zu einer Zeit vorliegen, wenn diese bereits die Werte von ihren Eingängen gelesen haben und bereit sind diese in das weitere isochrone Datenpaket bzw. den ihnen vorliegenden Teil des weiteren isochronen Datenpakets zu schreiben.

Die oben genannte Aufgabe wird auch gelöst durch einen erfindungsgemäßen Lokalbusmaster eines Lokalbusses, insbesondere eines Ringbusses, mit Datenbusteilnehmern. Der Lokalbusmaster weist dabei auf ein Mittel zum Senden einer ersten Kennung eines Zyklusrahmens, wobei die erste Kennung den Beginn des Zyklusrahmens definiert. Das Mittel zum Senden ist angepasst, Prozessdaten und Managementdaten über den Lokalbus zu senden, wobei die Prozessdaten und Managementdaten innerhalb des Zyklusrahmens übertragbar sind. Beim erfindungsgemäßen Lokalbusmaster ist das Mittel zum Senden angepasst, in einem ersten zeitlichen Abstand zur ersten Kennung zumindest ein isochrones Datenpaket zu senden, welches die Prozessdaten beinhaltet. Wenn innerhalb des Zyklusrahmens Managementdaten übertragen werden, so ist das Mittel zum Senden angepasst, diese Managementdaten disjunkt zu den Prozessdaten zu senden. Das Mittel zum Senden kann beispielsweise eine Schaltung, insbesondere eine Transceiverschaltung sein. Die Schaltung kann in einem anwendungsspezifischen integrierten Schaltkreis (*engl.* ASIC) oder in einer Feld programmierbaren (Logik-) Gatter-Anordnung (*engl.* FPGA) implementiert sein. Das Mittel zum Senden kann auch einen Kodierer aufweisen, der die zu sendenden Daten auf dem Lokalbus kodiert. Das Mittel zum Senden kann auch einen Modulierer aufweisen, der die zu sendenden Daten auf dem Lokalbus moduliert.

Das Mittel zum Senden ist weiter angepasst, die Managementdaten in einem asynchronen Datenpaket zu senden.
In einer bevorzugten Ausführungsform des erfindungsgemäßen Lokalbusmasters weist dieser weiter ein Mittel auf zum Ermitteln des ersten zeitlichen Abstandes basierend auf einem Ausgabezeitpunkt, der ein Ausgeben von Prozessdaten an einem Ausgang der jeweiligen Datenbusteilnehmer festlegt, wobei der Ausgabezeitpunkt in einem zweiten zeitlichen Abstand zur ersten Kennung vorgegeben ist.

In einer bevorzugten Ausführungsform des erfindungsgemäßen Lokalbusmasters ist das Mittel zum Ermitteln angepasst, einen vierten zeitlichen Abstand zur ersten Kennung basierend auf einem Eingabezeitpunkt, der eine Eingabe von Prozessdaten an einem Eingang der jeweiligen Datenbusteilnehmer festlegt, zu ermitteln. Dabei ist der Eingabezeitpunkt in einem dritten zeitlichen Abstand zur ersten Kennung vorgegeben oder bestimmt. Das Mittel zum Übertragen ist angepasst, zumindest ein weiteres isochrones Datenpaket im Zyklusrahmen in einem vierten zeitlichen Abstand zur ersten Kennung zu senden. Dabei kann das weitere isochrone Datenpaket verwendet werden, zur Abfrage der Werte an den Eingängen der jeweiligen Datenbusteilnehmer. Dabei kann der Lokalbusmaster des Weiteren ein Mittel zum Empfangen von Prozessdaten aufweisen.

### 4. Kurze Beschreibung der Zeichnungen

Die Erfindung wird nachfolgend anhand von Ausführungsbeispielen mit den beigefügten Zeichnungen näher erläutert. Aus den beschriebenen Ausführungsbeispielen ergeben sich weitere Einzelheiten, Merkmale und Vorteile des Gegenstands der Erfindung. Es zeigen:
- Fig. 1: ein schematisches Blockdiagramm einer beispielhaften Automatisierungsanlage mit einer speicherprogrammierbaren Steuerung und einem beispielhaften Ringbus;
- Fig. 2: eine schematische Darstellung eines Zyklusrahmens;
- Fig. 3: eine schematische Darstellung eines isochronen Datenpakets bestehend aus Symbolen, wobei einige Symbole Prozessdaten tragen;
- Fig. 4: eine schematische Darstellung eines asynchronen Datenpakets bestehend aus Symbolen, wobei einige Symbole Managementdaten tragen;
- Fig. 5: eine schematische Darstellung eines weiteren asynchronen Datenpakets bestehend aus Symbolen, wobei einige Symbole Managementdaten tragen; und
- Fig. 6: eine beispielhafte zeitliche Abfolge von asynchronen und isochronen Datenpaketen innerhalb eines Zyklusrahmens.

### 5. Beschreibung bevorzugter Ausführungsbeispiele

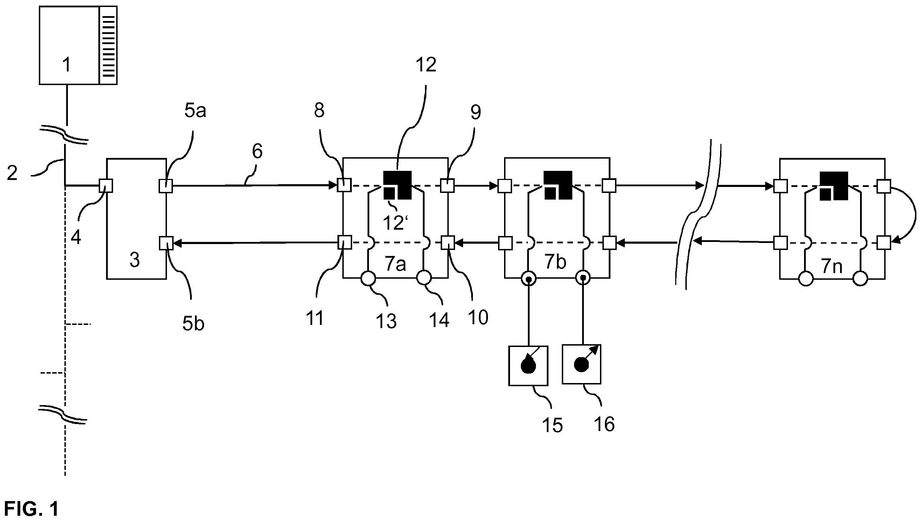

Figur 1 zeigt ein schematisches Blockdiagramm einer Automatisierungsanlage. Es wird vom Fachmann verstanden werden, dass die gezeigte Automatisierungsanlage nur beispielhaft ist und alle zu der Automatisierungsanlage gehörenden Elemente, Module, Bauteile, Teilnehmer und Einheiten verschieden ausgestaltet sein können aber dennoch die hier beschriebenen Grundfunktionalitäten erfüllen können.

Die in Figur 1 gezeigte Automatisierungsanlage weist eine übergeordnete Steuerung 1 auf, die beispielsweise mit einer speicherprogrammierbaren Steuerung, SPS, realisiert werden kann. Eine derartige SPS 1 dient grundsätzlich zur Steuerung und Regelung des von der Automatisierungsanlage ausgeführten Prozesses. Heutzutage übernehmen SPSen 1 in Automatisierungsanlagen allerdings auch weitergehende Funktionen, wie zum Beispiel die Visualisierung, Alarmierung und Aufzeichnung aller den Prozess betreffenden Daten und als solche fungiert die SPS 1 als eine Mensch-Maschine Schnittstelle. Es gibt SPS 1 in unterschiedlichen Leistungsklassen, die unterschiedliche Ressourcen (Rechenkapazität, Speicherkapazität, Anzahl und Art von Ein- und Ausgängen, und Schnittstellen) aufweisen, die es der SPS 1 ermöglichen den Prozess der Automatisierungsanlage zu steuern und zu regeln. Eine SPS 1 hat zumeist einen modularen Aufbau und besteht aus einzelnen Komponenten, die jeweils eine andere Aufgabe erfüllen. Üblicherweise besteht eine SPS 1 aus einer zentralen Rechenbaugruppe (mit einem oder mehreren Hauptprozessoren und Speichermodulen) und mehreren Baugruppen mit Eingängen und Ausgängen. Derartige modular aufgebaute SPS 1 lassen sich durch Hinzufügen von Baugruppen leicht erweitern. Hierbei hängt es von der Komplexität des Prozesses und der Komplexität des Aufbaus der Automatisierungsanlage ab, welche Baugruppen in der SPS 1 integriert sein müssen. In heutigen Automatisierungsanlagen ist die SPS 1 auch zumeist kein unabhängiges System mehr, sondern die SPS 1 ist über entsprechende Schnittstellen - hier nicht dargestellt - mit dem Internet oder Intranet verbunden. Dies bedeutet, die SPS 1 ist Teil eines Netzwerks über welches oder von welchem die SPS 1 Informationen, Instruktionen, Programmierungen etc. erhalten kann. Zum Beispiel kann die SPS 1 über eine Verbindung zu einem sich im Intranet oder Internet befindlichen Computer Informationen über dem Prozess zugeführte Materialien bekommen, so dass beispielsweise durch die Kenntnis deren Anzahl oder Beschaffenheit der Prozess optimal gesteuert werden kann. Es ist auch denkbar, dass die SPS 1 durch einen Zugriff aus dem Intranet oder Internet von einem Anwender gesteuert wird. So kann beispielsweise ein Anwender mit Hilfe eines Computers, auch Leitrechner genannt, auf die SPS 1 zugreifen und deren Anwenderprogrammierung überprüfen, ändern, oder korrigieren. Dementsprechend ist der Zugriff auf die SPS 1 von einer oder mehreren Fernwarten oder Leitstellen möglich. Die Leitrechner können gegebenenfalls Visualisierungseinrichtungen zur Darstellung von Prozessabläufen haben.

Zur Steuerung des Prozesses der Automatisierungsanlage ist die SPS 1 mit Automatisierungsgeräten verbunden. Um den Verdrahtungsaufwand gering zu halten werden für diese Verbindungen Bussysteme verwendet. In dem in Figur 1 gezeigten Ausführungsbeispiel ist die SPS 1 mittels eines übergeordneten Busses 2, der in dem hier gezeigten Ausführungsbeispiel ein Feldbus sein kann, mit einem Lokalbusmaster 3 eines untergeordneten Lokalbussystems verbunden. An den übergeordneten Bus 2 können aber nicht nur wie in dem hier gezeigten Ausführungsbeispiel ein Lokalbusmaster 3 eines Lokalbusses angeschlossen werden, sondern auch andere beliebige Teilnehmer - hier nicht gezeigt -, die zur Kommunikation mit der SPS 1 ausgestaltet sind.

Der übergeordnete Bus 2 ist in dem hier gezeigten Ausführungsbeispiel mit dem Lokalbusmaster 3 verbunden. Hierzu weist der Lokalbusmaster 3 eine erste Schnittstelle 4 auf, die derart ausgelegt ist, dass diese mit dem übergeordneten Bus 2 verbunden werden kann. Die Schnittstelle 4 kann hierzu beispielsweise eine Aufnahme in Form einer Buchse aufweisen und der übergeordnete Bus 2 kann einen Stecker aufweisen, der von der Buchse aufgenommen werden kann. Dabei können der Stecker und die Buchse zum Beispiel ein Modularstecker und eine Modularbuchse sein, d.h. jede Ader des übergeordneten Busses 2 wird mit einer Verbindung in der Modularbuchse elektrisch oder optisch verbunden. Dem Fachmann sind aber auch andere Möglichkeiten bekannt, wie eine Schnittstelle 4 auszulegen ist, so dass der Lokalbusmaster 3 elektrisch oder optisch mit dem übergeordneten Bus 2 verbunden werden kann. Dem Fachmann sind dabei Schraub-, Dreh-, Klick- oder Steckverbindungen bekannt, mit deren Hilfe sich eine elektrische oder optische Verbindung herstellen lassen kann. Dabei wird zumeist ein männlicher Stecker von einem weiblichen Gegenstück aufgenommen. Diese Aufnahme stellt zumeist nicht nur die elektrische oder optische Verbindung her, sondern sorgt auch dafür, dass die beiden Teile mechanisch gekoppelt werden und nur mit Aufwendung einer bestimmten Kraft wieder voneinander gelöst werden können. Es ist aber auch denkbar, dass der übergeordnete Bus 2 fest mit der Schnittstelle 4 verdrahtet ist.

Der Lokalbusmaster 3 in dem hier gezeigten Ausführungsbeispiel weist eine weitere zweite Schnittstelle 5a, 5b auf, um den Lokalbusmaster 3 mit dem Lokalbus zu verbinden. An den Lokalbus sind Datenbusteilnehmer 7a, 7b, ..., 7n angeschlossen bzw. bilden diesen. Der Lokalbus ist vorteilhafterweise derart ausgebildet, dass ein vom Lokalbusmaster 3 gesendetes Datenpaket durch alle mit dem Lokalbus verbundenen Datenbusteilnehmer 7a, 7b, ..., 7n und an den Lokalbusmaster 3 zurück übertragen wird. Dabei empfängt ein Datenbusteilnehmer 7a, 7b, ..., 7n von seinem vorgelagerten Datenbusteilnehmer 7a, 7b, ..., 7n immer nur einen Teil des Datenpakets. Nach einer Zeitspanne in der die in diesem Teil enthaltenen Daten vom Datenbusteilnehmer 7a, 7b, ..., 7n verarbeitet werden können, wird der Teil an den nachgelagerten Datenbusteilnehmer 7a, 7b, ..., 7n weitergeleitet und gleichzeitig wird von dem vorgelagerten Datenbusteilnehmer 7a, 7b, ..., 7n ein neuer Teil des Datenpakets empfangen. Auf diese Weise passieren alle Teile des Datenpakets sequentiell alle Datenbusteilnehmer 7a, 7b, ..., 7n. Der Lokalbus ist vorteilhafterweise in einer ringförmigen Struktur ausgebildet. Derartige Lokalbusse können auch als Ringbus 6 bezeichnet werden. Der Lokalbus kann alternativ auch strangförmig oder sternförmig oder aus einer Kombination oder Mischform der zuvor genannten ausgebildet sein. Das Senden und Empfangen der Datenpakete wird dabei über die zweite Schnittstelle des Lokalbusmasters 3 bewerkstelligt. In dem hier gezeigten Ausführungsbeispiel teilt sich die zweite Schnittstelle in einen ersten Teil 5a und einen zweiten Teil 5b auf. Der erste Teil 5a der zweiten Schnittstelle stellt die Abwärtsverbindung im Ringbus 6 her und der zweite Teil 5b der zweiten Schnittstelle stellt die Aufwärtsverbindung im Ringbus 6 her.

Der Ringbus 6, dessen Datensenderichtung mit Pfeilen in dem in Figur 1 gezeigten Ausführungsbespiel gezeigt ist, weist in dem hier gezeigten Ausführungsbeispiel die Datenbusteilnehmer 7a, 7b, ..., 7n auf. Diese Datenbusteilnehmer 7a, 7b, ..., 7n weisen in dem hier gezeigten Ausführungsbeispiel jeweils eine Schnittstelle 8 auf, um Daten von einem vorgelagerten oder vorangehenden Datenbusteilnehmer 7a, 7b, ..., 7n zu empfangen. Im Fall von Datenbusteilnehmer 7a, empfängt dieser über die Schnittstelle 8 Daten von dem vorgelagerten Lokalbusmaster 3. Die Daten auf dem Lokalbus 6 können auch als Lokalbusdaten bezeichnet werden. Des Weiteren weisen die Datenbusteilnehmer 7a, 7b, ..., 7n in dem hier gezeigten Ausführungsbeispiel jeweils eine Schnittstelle 9 auf, um Daten an einen nachgelagerten oder nachfolgenden Datenbusteilnehmer 7a, 7b, ..., 7n weiterzuleiten. In Fall von Datenbusteilnehmer 7a sendet dieser Daten an den nachgelagerten Datenbusteilnehmer 7b über die Schnittstelle 9. Die Schnittstellen 8 und 9 dienen dabei zum Propagieren von Daten in Abwärtsrichtung des Ringbusses 6, d.h. von dem Lokalbusmaster 3 weg. Des Weiteren weisen die Datenbusteilnehmer 7a, 7b, ..., 7n in diesem Ausführungsbeispiel auch Schnittstellen 10 und 11 auf, zum Propagieren von Daten in Aufwärtsrichtung des Ringbusses 6, d.h. zum Lokalbusmaster 3 hin. Im Fall des Datenbusteilnehmers 7a ist Schnittstelle 10 dabei dazu ausgelegt, Daten von dem nachgelagerten oder nachfolgenden Datenbusteilnehmer 7b zu empfangen und Schnittstelle 11 ist dazu ausgelegt, Daten an den vorgelagerten oder vorangehenden Datenbusteilnehmer, hier den Lokalbusmaster 3, weiterzuleiten. Es kann also auch gesagt werden, dass die Schnittstellen 9 und 11 Senderschnittstellen sind, wohingegen die Schnittstellen 8 und 10 Empfängerschnittstellen sind.

In dem hier gezeigten Ausführungsbeispiel werden die Verbindungen der Schnittstellen und der SPS 1 beziehungsweise den Datenbusteilnehmern 7a, 7b, ..., 7n mit Hilfe von Kabeln oder Leiterplatten zur direkten oder indirekten Kontaktierung mittels elektrischen Kontakten realisiert. Eine andere Alternative ist, dass die einzelnen Verbindungen kabellos hergestellt werden, und die Schnittstellen die notwendigen Umsetzungen auf die verwendeten Funkstandards bereitstellen.

Auch wenn der Lokalbusmaster 3 und die einzelnen Datenbusteilnehmer 7a, 7b, ..., 7n in dem hier gezeigten Ausführungsbeispiel voneinander beabstandet gezeigt sind, der Lokalbusmaster 3 also dezentral angeordnet ist von den Datenbusteilnehmern 7a, 7b, ..., 7n, ist dem Fachmann bewusst, dass die Datenbusteilnehmer 7a, 7b, ..., 7n und der Lokalbusmaster 3 - der auch einen Datenbusteilnehmer des Ringbusses 6 darstellt - auch direkt miteinander verbunden werden können. Dabei können beispielsweise Kontakte des einen Datenbusteilnehmers in entsprechende Aufnahmen oder Aufnahmekontakte eines direkt benachbarten Datenbusteilnehmers greifen, um so eine elektrische Verbindung zwischen den Datenbusteilnehmern herzustellen, damit Daten in Abwärts- und Aufwärtsrichtung gesendet werden können. Beispielsweise können die Datenbusteilnehmer 7a, 7b, ...,7n an der dem Master abgewandten Seite Aufnahmen und an der dem Master zugewandten Seite Kontakte aufweisen. Werden die Datenbusteilnehmer 7a, 7b, ...,7n dann entsprechend aneinandergereiht, so greifen die Kontakte des einen Datenbusteilnehmers 7a, 7b, ..., 7n jeweils in die Aufnahmen des anderen Datenbusteilnehmers 7a, 7b, ..., 7n ein und es kann eine elektrische Verbindung erzeugt werden. Der Lokalbusmaster 3 weist dann entsprechend Aufnahmen an der Seite auf, die in die Kontakte des ersten Datenbusteilnehmers 7a greifen, um so zwischen den Schnittstellen 5a und 8 beziehungsweise den Schnittstellen 5b und 11 eine elektrische Verbindung zu erzeugen. Dem Fachmann sind aber auch noch andere Möglichkeiten, z.B. Druckkontakte, Messer- und Gabelkontakte bekannt, wie zwei direkt aneinander angeordnete Datenbusteilnehmer 7a, 7b, ..., 7n eine elektrische oder optische Verbindung herstellen können.

Im Falle dessen, dass die Datenbusteilnehmer 7a, 7b, ..., 7n und der Lokalbusmaster 3 direkt miteinander verbunden werden sollen, können diese auch mechanische Aufnahmen oder mechanische Befestigungsmittel aufweisen, mit denen die einzelnen Datenbusteilnehmer 7a, 7b, ..., 7n und der Lokalbusmaster 3 miteinander verbunden werden können. Hierbei kann zum Beispiel ein Datenbusteilnehmer 7a, 7b, ..., 7n an einer Seite einen Vorsprung aufweisen und an der anderen Seite eine Hinterschneidung aufweisen. Werden die Datenbusteilnehmer 7a, 7b, ..., 7n dann aneinandergereiht, so greift ein Vorsprung in eine Hinterschneidung des anderen Datenbusteilnehmers 7a, 7b, ..., 7n ein, so dass eine mechanische Kopplung entsteht. Zur einfachen Aneinanderreihung der Datenbusteilnehmer 7a, 7b, ..., 7n können diese auch auf einer gemeinsamen Aufnahme, zum Beispiel einer Hutschiene angeordnet werden. Zur Befestigung auf der Hutschiene können die Datenbusteilnehmer 7a, 7b, ..., 7n entsprechende Befestigungsmittel aufweisen. Alternativ oder zusätzlich können die Datenbusteilnehmer 7a, 7b, ..., 7n auch beispielsweise lösbar verbindbare Befestigungsmittel aufweisen, mit denen die Datenbusteilnehmer 7a, 7b, ..., 7n entweder an der Hutschiene oder an einer anderen Aufnahme befestigt werden können. Dazu kann das lösbar verbindbare Befestigungsmittel austauschbar sein und ein entsprechendes Befestigungsmittel für die gewünschte Aufnahme kann mit den Datenbusteilnehmern 7a, 7b, ..., 7n verbunden werden, so dass diese an der gewünschten Aufnahme befestigt werden können.

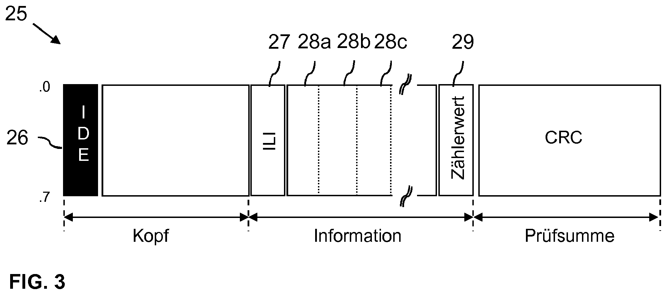

Des Weiteren weisen die Datenbusteilnehmer 7a, 7b, ..., 7n in dem in Figur 1 gezeigten Ausführungsbeispiel auch eine Verarbeitungseinheit 12 auf, die beispielsweise aus einer Verarbeitungskomponente und einer Logikeinheit besteht, die in Figur 3 näher gezeigt sind. Die Verarbeitungseinheit 12 kann auch als Gesamtschaltung des Datenbusteilnehmers bezeichnet werden. D.h. die Verarbeitungseinheit 12 empfängt Daten über die Eingänge 8 und 10 und gibt Daten auf den Ausgängen 9 und 11 aus. Des Weiteren kann die Verarbeitungseinheit 12 Daten von den Ein-/und Ausgängen 13 und 14 empfangen beziehungsweise ausgeben. Weiterhin hat die Verarbeitungseinheit 12 Zugriff auf einen Speicher 12' des Datenbusteilnehmers 7a, 7b, ..., 7n in dem beispielsweise Daten, Prozessdaten, oder Instruktionslisten gespeichert sind.

Die Verarbeitungseinheit 12 kann auch als Gesamtschaltung des Datenbusteilnehmers bezeichnet werden. D.h. die Verarbeitungseinrichtung 12 empfängt Daten über die Eingänge 8 und 10 und gibt Daten auf den Ausgängen 9 und 11 aus. Des Weiteren kann die Verarbeitungseinrichtung 12 Daten von den Ein-/und Ausgängen 13 und 14 empfangen beziehungsweise ausgeben. Weiterhin hat die Verarbeitungseinheit 12 Zugriff auf einen Speicher 12' des Datenbusteilnehmers 7a, 7b, ..., 7n in dem beispielsweise Daten, Prozessdaten, oder Instruktionslisten gespeichert sind.

Die Verarbeitungseinheit 12 kann dazu ausgelegt sein, empfangene Daten zu verarbeiten und Daten auszugeben. Empfangen werden können zu verarbeitende Daten entweder von einem vorgelagerten Datenbusteilnehmer oder von Eingängen 13 des Datenbusteilnehmers 7a, 7b, ..., 7n. Dabei können die Eingänge 13 des Datenbusteilnehmers 7a, 7b, ..., 7n mit Sensoren 15 verbunden sein, die zum Beispiel Messdaten, Zustandsdaten, etc. senden. Ausgegeben werden können verarbeitete Daten entweder an einen nachgelagerten Datenbusteilnehmer oder an Ausgängen 14 des Datenbusteilnehmers 7a, 7b, ..., 7n. Dabei können die Ausgänge 14 des Datenbusteilnehmers 7a, 7b, ..., 7n mit Aktoren 16 verbunden sein, die zum Beispiel mit Hilfe der an sie gerichteten Daten eine bestimmte Aktion durchführen. Wenn in Aufwärtsrichtung auch eine Verarbeitung der Daten stattfinden soll, so können Daten auch von einem nachgelagerten Datenbusteilnehmer 7a, 7b, ..., 7n empfangen werden und verarbeitete Daten an einen vorgelagerten Datenbusteilnehmer 7a, 7b, ..., 7n gesendet werden.

Einfachheitshalber sind in dem hier gezeigten Ausführungsbeispiel die Datenbusteilnehmer 7a, 7b, ..., 7n nur mit einem Eingang 13 und einem Ausgang 14 gezeigt und auch nur Datenbusteilnehmer 7b ist mit Sensor 15 und Aktor 16 verbunden. Es ist dem Fachmann aber bewusst, dass die Datenbusteilnehmer 7a, 7b, ..., 7n eine Vielzahl von Ein- und Ausgängen 13 und 14 aufweisen können, und mit einer Vielzahl von unterschiedlichen Sensoren 15 und Aktoren 16 verbunden werden können. Dabei ist das die Sensoren 15 charakterisierende Merkmal, dass die Sensoren 15 Daten oder Signale aufnehmen und an den Datenbusteilnehmer 7a, 7b, ..., 7n senden, wohingegen Aktoren 16 Daten oder Signale von den Datenbusteilnehmern 7a, 7b, ..., 7n empfangen und basierend auf diesen Daten oder Signalen eine Aktion ausführen.

Alternativ können die Schnittstellen 8, 9, 10 und 11 in einer Moduleinheit integriert sein und die Datenbusteilnehmer 7a, 7b, ..., 7n können auf diese Moduleinheit aufgesteckt werden. Die Moduleinheiten können auch als Basiselemente des Ringbusses 6 bezeichnet werden. Die Ringbusinfrastruktur wird dabei durch die Moduleinheiten aufgebaut und die Datenbusteilnehmer 7a, 7b, ..., 7n sind auswechselbar, so dass der Ringbus 6 mit beliebigen Datenbusteilnehmern 7a, 7b, ..., 7n aufgebaut werden kann. Mit Hilfe der Moduleinheiten ist auch sichergestellt, dass auch wenn ein Datenbusteilnehmer 7a, 7b, ..., 7n entfernt wird, die Kommunikation zwischen den
restlichen Datenbusteilnehmern 7a, 7b, ..., 7n nicht unterbrochen wird, weil die Kommunikation über die noch vorhandenen Moduleinheiten geschieht.

Die in diesem Ausführungsbeispiel gezeigten Datenbusteilnehmer 7a, 7b, ..., 7n werden auf Grund ihrer Ein- und Ausgänge 13, 14, die mit Sensoren 15 beziehungsweise Aktoren 16 verbunden werden können, auch häufig als E/A-Module bezeichnet. Auch wenn die Datenbusteilnehmer 7a, 7b, ..., 7n in dem hier gezeigten Ausführungsbeispiel als räumlich getrennt von den Sensoren 15 beziehungsweise Aktoren 16 dargestellt sind, so können die Sensoren 15 beziehungsweise Aktoren 16 auch in dem E/A-Modul integriert sein.

Der in dem hier gezeigten Ausführungsbeispiel gezeigte Ringbus 6 basiert auf einer Zyklusrahmenkommunikation. Ein Zyklusrahmen kann dabei beispielsweise als ein wiederkehrendes (zyklisches) vorzugsweise äquidistantes Zeitintervall, in dem Daten auf dem Ringbus 6 übertragbar sind, definiert werden. Der Zyklusrahmen weist zumindest eine erste Kennung (SOC) und einen Zeitbereich zur Übertragung von Daten auf. Mehrere erste Kennungen (SOC) aufeinander folgender Zyklusrahmen sind dabei vorteilhafterweise in einem zeitlich äquidistanten Abstand zueinander. Der genannte Zeitbereich ist für die Übertragung der Daten vorgesehen, die innerhalb des Zyklusrahmens in Form von Datenpaketen übertragen werden können. Die erste Kennung (SOC) und die Datenpakete werden über den Ringbus 6 übertragen und durchlaufen alle Datenbusteilnehmer 7a, 7b, ..., 7n. Vorteilhafterweise wird der Zyklusrahmen durch den Lokalbusmaster 3 im Ringbus 6 initiiert. Die erste Kennung (SOC) ist separat, also als eigenständiges Symbol übertragbar oder vorteilhafterweise in einem Startdatenpaket (SOC-Paket) enthalten.

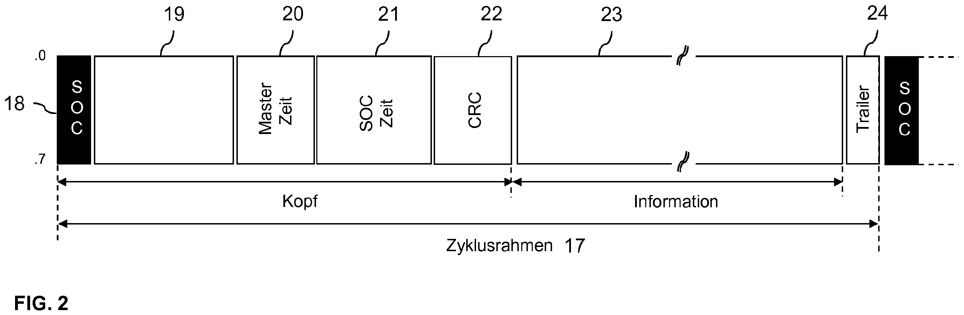

Innerhalb des Zeitbereichs des Zyklusrahmens werden keine, ein oder mehrere Datenpakete übertragen. Vorteilhafterweise werden in einem Zyklusrahmen Leerlauf-Daten (Idle-Data) eingefügt, insbesondere angrenzend an zumindest ein Datenpaket. Vorteilhafterweise bewirkt die Übertragung der Datenpakete und/oder der Leerlauf-Daten ein ununterbrochenes Signal auf dem Ringbus 6. Das Signal ermöglicht es den Datenbusteilnehmern 7a, 7b, ..., 7n, sich auf dieses zeitlich zu synchronisieren. Vorteilhafterweise sind innerhalb eines Zyklusrahmens zusätzlich Leerlauf-Daten am Ende des Zyklusrahmens (Trailer). Der Trailer hat eine variable Länge und folgt auf den Zeitbereich zur Datenübertragung vorzugsweise bis zur folgenden ersten Kennung (SOC) des nächsten Zyklusrahmens. Ein entsprechender Zyklusrahmen ist beispielhaft in Figur 2 gezeigt.

Jedes Datenpaket wird von dem Lokalbusmaster 3 in Abwärtsrichtung an den ersten Datenbusteilnehmer 7a des Ringbusses 6 gesendet. Dieser empfängt einen ersten Teil des Datenpakets über die Schnittstelle 8. Ein derartiger Teil des Datenpakets wird im Folgenden auch als Stück, Einheit, oder Symbol bezeichnet. Der Datenbusteilnehmer 7a führt dann eine Verarbeitung des Teils aus, und leitet den Teil dann an den nächsten Datenbusteilnehmer 7b über Schnittstelle 9 weiter, vorzugsweise gleichzeitig empfängt der erste Datenbusteilnehmer 7a einen zweiten Teil des Datenpakets usw. Die Größe der Teile des Datenpakets, also die Stückelung des Datenpakets, hängt dabei von der Aufnahmekapazität der Datenbusteilnehmer 7a, 7b, ..., 7n ab, beispielsweise können zur Verarbeitung gleichzeitig eine feste Anzahl von Bits, beispielsweise 8 Bits des Datenpakets am Datenbusteilnehmer 7a, 7b, ..., 7n vorliegen. Wenn die Datenübertragung auf dem Lokalbus 6 seriell ist, so können die Schnittstellen 8 und 10 angepasst sein, eine seriell zu parallel Umsetzung durchzuführen und die Schnittstellen 9 und 11 eine parallel zu seriell Umsetzung. Hierzu können die Schnittstellen 8, 9, 10, 11 entsprechende Register - hier nicht gezeigt - aufweisen. Die Schnittstellen 8, 9, 10, 11 können auch dazu angepasst sein, eventuell nötige Kodierungen und Enkodierungen durchzuführen. Beispielsweise kann auf dem Lokalbus ein 8b10b-Code verwendet werden, deren Umsetzung durch die Schnittstellen 8, 9, 10 und 11 bewerkstelligt werden kann.

Das Datenpaket durchläuft einheitenweise, stückchenweise, oder Teile weise, zum Beispiel in Teilen oder Symbolen von 8 Bits, die Datenbusteilnehmer 7a, 7b, ..., 7n. Der Teil des Datenpakets, welcher vom letzten Datenbusteilnehmer, in dem hier gezeigten Ausführungsbeispiel Datenbusteilnehmer 7n, verarbeitet worden ist, durchläuft dann in Aufwärtsrichtung den Ringbus 6, so dass die Teile ausgehend von dem letzten Datenbusteilnehmer 7n wieder in Richtung Lokalbusmaster 3 durch alle Datenbusteilnehmer 7a, 7b, ..., 7n aufwärts gesendet werden. Hierzu weist der letzte Datenbusteilnehmer 7n entweder eine schaltbare Brücke auf, die die Schnittstelle 9 mit der Schnittstelle 9 verbindet oder an den letzten Datenbusteilnehmer 7n wird eine schaltbare Brücke - hier nicht gezeigt - angeschlossen, die die Funktion übernimmt die Teile des Datenpakets von der Schnittstelle 9 auf die Schnittstelle 10 zu leiten. Alternativ kann die Schnittstelle 10 des Datenbusteilnehmers 7n auch mit Hilfe einer Bypassleitung - hier nicht gezeigt - direkt mit der Schnittstelle 5b des Lokalbusmasters 3 verbunden werden.

In der Aufwärtsrichtung können die Einheiten des Datenpakets beziehungsweise der Datenpakete, wie in dem hier gezeigten Ausführungsbeispiel durch die einzelnen Datenbusteilnehmer 7a, 7b, ..., 7n zurück an den Lokalbusmaster 3 geschleift werden, ohne dass eine weitere Verarbeitung stattfindet. Es ist aber auch denkbar, dass in der Aufwärtsrichtung erneut eine Verarbeitung der Einheiten des Datenpakets stattfindet, so dass das Datenpaket zweimal verarbeitet werden kann, einmal auf der Abwärtsrichtung zum letzten Datenbusteilnehmer 7n und einmal in Aufwärtsrichtung zum Lokalbusmaster 3. Beispielsweise kann in Aufwärtsrichtung eine Verarbeitung durch Signalauffrischung und/oder Phasenschiebung erfolgen.

Bei der Verarbeitung der Datenpakete in Abwärtsrichtung, d.h. von dem Lokalbusmaster 3 weg, oder in Aufwärtsrichtung, d.h. zum Lokalbusmaster 3 hin, wird die Verarbeitung mit Hilfe von Instruktionslisten bewerkstelligt, wobei die Instruktionslisten Sätze von Instruktionen beinhalten, die von der Verarbeitungseinheit 12 der Datenbusteilnehmer 7a, 7b, ..., 7n ausgeführt werden können. Die Instruktionslisten selbst können den einzelnen Datenbusteilnehmern 7a, 7b, ..., 7n in einer Initialisierungsphase vom Lokalbusmaster 3 zugesandt werden oder vorteilhaft während der laufenden Kommunikation den Datenbusteilnehmern 7a, 7b, ..., 7n zugesandt werden, so dass eine Programmierung der Datenbusteilnehmer 7a, 7b, ..., 7n ohne Unterbrechung der Kommunikation stattfindet.

Welche der Instruktionslisten die Datenbusteilnehmer 7a, 7b, ..., 7n verwenden sollen kann den Datenbusteilnehmern 7a, 7b, ..., 7n anhand von einem Instruktionslistenindex mitgeteilt werden. Dieser Instruktionslistenindex informiert den Datenbusteilnehmer darüber, welche gespeicherte Instruktionsliste verwendet werden soll. Ein Instruktionslistenindex ist also einer Instruktionsliste zugeordnet oder umgekehrt, so dass mit Hilfe des Instruktionslistenindexes die zu verwendende Instruktionsliste identifiziert werden kann. Hierzu weist der Instruktionslistenindex bevorzugt einen Wert auf, der zugeordnet ist zu einer Instruktionsliste, beispielsweise weist der Wert auf eine bestimmte Instruktionsliste hin oder auf deren Speicherplatz. Dazu kann der Wert selbst die Speicheradresse sein, wo die Instruktionsliste gespeichert ist oder wo zumindest eine erste Instruktion der Instruktionsliste gespeichert ist. Alternativ oder zusätzlich kann der Wert auch auf einen Speicherbereich hinweisen, in dem die entsprechende Instruktionsliste abgespeichert ist. In den zuvor genannten Fällen kann auch von einer direkten Zuordnung gesprochen werden. Der Wert des Instruktionslistenindex kann beispielsweise aber auch verwendet werden, als Eingabe einer Umsetzungstabelle *(engl.* Lookup-Tabelle, LUT). Dabei ist der Wert des Instruktionslistenindex der Eingangswert der Umsetzungstabelle. Der Ausgangswert der Umsetzungstabelle kann die Speicheradresse der ersten Instruktion in der zugehörigen Instruktionsliste sein oder anderweitig die Instruktionsliste identifizieren. Die Umsetzungstabelle kann softwaretechnisch sowie hardwaretechnisch in Form von beispielsweise Logiken hinterlegt sein und eine eineindeutige Umsetzung von einem Eingangswert in einen Ausgangswert angeben, wobei der Ausgangswert einen Hinweis auf die zu verwendende Instruktionsliste gibt. Dabei hängt es von der Umsetzungstabelle ab, wie ein Zusammenhang zwischen dem Instruktionslistenindex und der Instruktionsliste hergestellt wird. Bei der Verwendung einer Umsetzungstabelle kann auch von einer indirekten Zuordnung gesprochen werden. Bei der direkten sowie indirekten Zuordnung ist aber über den Instruktionslistenindex die von dem Datenbusteilnehmer zu verwendende Instruktionsliste eineindeutig identifizierbar, d.h. auffindbar. Der Instruktionslistenindex kann vor den zu verarbeitenden Lokalbusdaten in das Datenpaket eingefügt werden, so dass die Datenbusteilnehmer 7a, 7b, ..., 7n entsprechend der Reihenfolge der Lokalbusdaten im Datenpaket die entsprechende Instruktionsliste verwenden können. Die Instruktionslisten weisen dabei Instruktionen auf, die an die Reihenfolge der Lokalbusdaten im Datenpaket angepasst sind. Die Instruktionslisten können dabei beispielsweise für Lokalbusdaten, die nicht an den Datenbusteilnehmer 7a, 7b, ..., 7n gerichtet sind eine "SKIP" Instruktion aufweisen, also den Datenbusteilnehmer 7a, 7b, ..., 7n anweisen den entsprechenden Teil des Datenpakets zu überspringen, wohingegen die Instruktionsliste für Lokalbusdaten, die an den Datenbusteilnehmer 7a, 7b, ..., 7n gerichtet sind entsprechende Instruktionen zum Verarbeiten der Lokalbusdaten aufweisen kann. Die Datenpakete zum Senden der Prozessdaten und der Managementdaten der Datenbusteilnehmer 7a, 7b, ..., 7n sind in den Figuren 3 bis 5 gezeigt.

Zunächst wird aber in Figur 2 schematisch ein Zyklusrahmen 17 gezeigt. Am Anfang des Zyklusrahmens 17 ist eine eineindeutige ersten Kennung 18 als Teil eines SOC-Pakets vorgesehen (SOC - *engl.* Start Of Cycle). Die erste Kennung 18 ist ein Bitmuster, das den Beginn des Zyklusrahmens 17 definiert. Der Kennung 18 folgend sind innerhalb des SOC-Pakets mehrere Teile 19, 20, 21, 22 des SOC-Pakets zeitlich angeordnet, die beispielsweise zur Steuerung und zur zeitlichen Synchronisation zwischen dem Lokalbusmaster 3 und den Datenbusteilnehmern 7a, 7b, ..., 7n verwendet werden können. Beispielsweise ist im SOC-Paket ein Feld 19 zeitlich angeordnet, in dem zumindest ein Wert zur Ver- bzw. Entschlüsselung der auf dem Lokalbus 6 übertragenen Daten vorhanden ist. Des Weiteren kann das SOC-Paket ein Feld 20 aufweisen, welches die Zeitgebung des Lokalbusmasters 3 enthält, so dass sich die Datenbusteilnehmern 7a, 7b, ..., 7n hierauf synchronisieren können. Des Weiteren kann das SOC-Paket ein Feld 21 als Zeitstempel enthalten, welches angibt wann die erste Kennung 18 von dem Lokalbusmaster 2 gesendet wurde. Das SOC-Paket kann des Weiteren eine erste Prüfsumme in Feld 22 enthalten, mit der geprüft werden kann, ob die in den Feldern 19, 20, 21, 22 des SOC-Pakets übertragenen Daten ohne Fehler empfangen wurden. Innerhalb des Zyklusrahmens 17 ist des Weiteren ein Informationszeitbereich 23 zeitlich angeordnet. Innerhalb dieses Informationszeitbereichs 23, werden isochrone und asynchrone Daten an die Datenbusteilnehmer übertragen. Innerhalb des Zyklusrahmens 17 kann am Ende des Zyklusrahmens 17 ein Zeitbereich (Trailer) 24 mit Idle-Daten vorgesehen sein. Der Zeitbereich 24 kann eine variable Länge haben und auf den Informationszeitbereich zur Datenübertragung folgen. Vorzugsweise ist die Länge des Zeitbereichs 24 bis zur folgenden ersten Kennung 18 des nächsten Zyklusrahmens 17 ausgedehnt. Vorteilhafterweise weist der Trailer 24 Leerlauf-Daten auf, also Daten die keine Steuerung oder Regelung an den Datenbusteilnehmern 7a, 7b, ..., 7n hervorrufen, und dennoch eine Synchronisation ermöglichen.

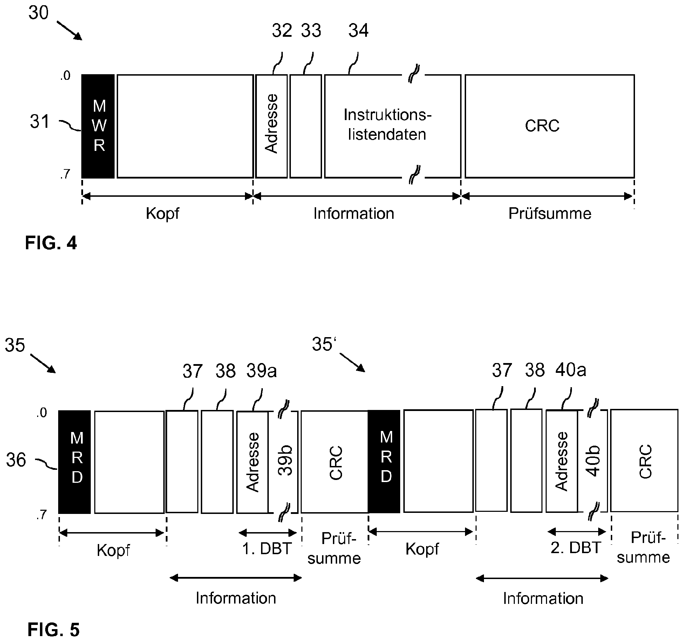

Innerhalb des Informationszeitbereichs 23 zur Datenübertragung können isochrone Daten beispielsweise in isochronen Datenpaketen enthalten sein sowie asynchrone Daten in asynchronen Datenpaketen. Figur 3 zeigt ein Beispiel eines isochronen Datenpakets und die Figuren 4 und 5 zeigen jeweils ein Beispiel für ein asynchrones Datenpaket mit dem entweder ein spezieller Datenbusteilnehmer 7a, 7b, ..., 7n adressiert werden kann oder eine Vielzahl von Datenbusteilnehmern 7a, 7b, ..., 7n.

Das in Figur 3 gezeigte isochrone Datenpaket 25 besteht aus einem Kopfteil, einem Informationsteil und einem Prüfsummenteil. Der Kopfteil beinhaltet ein Feld 26, welches ein eineindeutiges Bitmuster IDE enthält, welches auch als Codewort oder Paketkennung bezeichnet werden kann. Die Anzahl und die Ausgestaltung von Bitmustern hängen ab von der auf dem Ringbus 6 verwendeten Kodierung. Es ist dabei nur von Bedeutung, dass die Datenbusteilnehmer 7a, 7b, ..., 7n aus dem Bitmuster des Feldes 26 erkennen können, um welche Art von Datenpaket es sich handelt. In dem hier gezeigten Ausführungsbeispiel haben die Datenbusteilnehmer 7a, 7b, ..., 7n Kenntnis darüber, dass wenn ein Feld 26 mit einem Bitmuster IDE empfangen wird, dass es sich um ein isochrones Datenpaket 25 handelt, das Prozessdaten 28a, 28b, 28c trägt.

Der Kopfteil kann auch noch weitere Informationen beinhalten, die beispielsweise anzeigen, ob sich das isochrone Datenpaket 25 in Abwärtsrichtung oder Aufwärtsrichtung bewegt. Hierzu kann beispielsweise der letzte Datenbusteilnehmer 7n in den Kopfteil eine Information schreiben, dass das isochrone Datenpaket 25 bereits diesen Datenbusteilnehmer 7n passiert hat und zurückgesendet wurde in Richtung Lokalbusmaster 3. Des Weiteren kann der Kopfteil auch noch eine Information über die Länge des isochronen Datenpakets 25 enthalten, so dass die Datenbusteilnehmer 7a, 7b, ..., 7n die Integrität des isochronen Datenpakets 25 überprüfen können beziehungsweise Kenntnis darüber haben, wie viele Teile des isochronen Datenpakets 25 noch vom Datenbusteilnehmer 7a, 7b, ..., 7n empfangen werden. Dem Fachmann sind aber auch noch andere Felder bekannt, die in einen Kopfteil eines isochronen Datenpakets 25 vorhanden sein können, die z.B. zur Steuerung oder Fehlererkennung durch die Datenbusteilnehmer 7a, 7b, ..., 7n genutzt werden können.

Der Informationsteil des isochronen Datenpakets 25 kann als erstes einen Instruktionslistenindexfeld 27, ILI, aufweisen welches angibt, welche Instruktionsliste die Datenbusteilnehmer 7a, 7b, ..., 7n verwenden sollen. Beispielsweise kann im Normalbetrieb des Ringbusses 6 vorgesehen sein, dass alle Datenbusteilnehmer 7a, 7b, ..., 7n ihre erste Instruktionsliste verwenden, wohingegen im Fehlerfall die zweite Instruktionsliste verwendet werden soll. Dabei kann der Instruktionslistenindex auf den Speicherplatz der im Datenbusteilnehmer 7a, 7b, ..., 7n gespeicherten Instruktionsliste direkt hinweisen, oder der Instruktionslistenindex kann einen Wert aufweisen, mit dem der Datenbusteilnehmer 7a, 7b, ..., 7n beispielsweise über eine Umsetzungstabelle die entsprechende Instruktionsliste auffinden kann. Der Informationsteil weist des Weiteren die eigentlichen Prozessdaten 28a, 28b und 28c auf.

In dem hier gezeigten Ausführungsbeispiel ist das isochrone Datenpaket 25 in Symbole von jeweils 8 Bit eingeteilt. Das isochrone Datenpaket 25 wird auch in dieser Stückelung von den Datenbusteilnehmer 7a, 7b, ..., 7n empfangen und verarbeitet. D.h. als erstes sendet der Lokalbusmaster 3 das Symbol 26 an den ersten Datenbusteilnehmer 7a, nach einer vorher bestimmten Zeit, sendet der Lokalbusmaster 3 ein weiteres Symbol des Kopfteiles des isochronen Datenpakets 25 an den ersten Datenbusteilnehmer 7a, dieser wiederum sendet gleichzeitig das Symbol 26 an den zweiten Datenbusteilnehmer 7b in der Reihe der Datenbusteilnehmer 7a, 7b, ..., 7n. Diese vorher bestimmte Zeit zwischen Senden und Empfangen der Symbole des isochronen Datenpakets 25, ist in einer vorteilhaften Ausgestaltung abhängig von einer Taktung des Lokalbusses, insbesondere eine feste Anzahl von Takten, beispielweise zwei Takte.

Des Weiteren weist das isochrone Datenpaket 25 im Informationsteil noch ein Feld 29 auf, welches als Zähler ausgestaltet sein kann, und welches von jedem Datenbusteilnehmer 7a, 7b, ..., 7n durch welchen dieser Teil des isochronen Datenpakets 25 bereits geleitet wurde inkrementiert oder dekrementiert werden kann. Der Zählerwert des Feldes 29 kann von dem Lokalbusmaster 3 verwendet werden, um zu überprüfen, ob das isochrone Datenpaket 25 alle Datenbusteilnehmer 7a, 7b, ..., 7n durchlaufen hat.

Dem Fachmann ist bewusst, dass das hier dargestellte Ausführungsbeispiel des isochronen Datenpakets 25 nur exemplarisch zu verstehen ist und die Ausgestaltung des isochronen Datenpakets 25 sich ansonsten nach den Bedürfnissen und Anforderungen des speziellen Lokalbusses richten kann, wo es implementiert wird.

Figur 4 zeigt eine schematische Darstellung eines asynchronen Datenpakets 30, beispielsweise zum Programmieren eines Datenbusteilnehmers 7a, 7b, ..., 7n ohne dass die laufende Kommunikation unterbrochen werden muss. Das asynchrone Datenpaket 30 kann dabei in einer laufenden zyklischen Kommunikation zeitlich disjunkt zu isochronen Datenpaketen übertragen werden und beispielsweise zur Programmierung eines Datenbusteilnehmers 7a, 7b, ..., 7n verwendet werden. Die Programmierung des einen Datenbusteilnehmers 7a, 7b, ..., 7n findet dabei mit Hilfe von Instruktionslisteninformation statt, die mittels des asynchronen Datenpakets 30 an den zu programmierenden Datenbusteilnehmer 7a, 7b, ..., 7n gesendet wird.

Das asynchrone Datenpaket 30 besteht dabei aus einem allgemeinen Kopfteil, einem Informationsteil und einem Prüfsummenteil. Der Kopfteil beinhaltet ein Feld 31, welches ein eindeutiges Bitmuster MWR enthält, welches auch als Codewort oder Kennung bezeichnet werden kann. Die Datenbusteilnehmer 7a, 7b, ..., 7n haben die Kenntnis, dass wenn das Bitmuster MWR auftritt, Daten den Datenbusteilnehmern 7a, 7b, ..., 7n zur Verfügung gestellt werden. Dabei können diese Daten eben die Instruktionslisten für die Datenbusteilnehmer 7a, 7b, ..., 7n sein, um die Datenbusteilnehmer 7a, 7b, ..., 7n zu programmieren. Auch wenn hier als Beispiel die Instruktionslisten angeführt werden, ist dem Fachmann bewusst, dass auch andere Daten in dem asynchronen Datenpaket 30 enthalten sein können, mit denen die Datenbusteilnehmer 7a, 7b, ..., 7n programmiert werden können. Der Kopf des asynchronen Datenpakets 30 kann auch noch weitere Informationen enthalten, die zur Steuerung oder Fehlererkennung nötig sind - hier nicht gezeigt.

Der Informationsteil des asynchronen Datenpakets 30 beinhaltet ein Feld 32, in dem die Adresse des anzusprechenden Datenbusteilnehmers 7a, 7b, ..., 7n hinterlegt ist. Nur der Datenbusteilnehmer 7a, 7b, ..., 7n, dessen Adresse mit der in dem Feld 32 hinterlegten Adresse übereinstimmt, liest die Instruktionslistendaten 34 des Informationsteils des asynchronen Datenpakets 30. Der Informationsteil kann auch noch ein weiteres Feld 33 aufweisen, welches von dem entsprechenden Datenbusteilnehmer 7a, 7b, ..., 7n, dessen Adresse in Feld 32 hinterlegt ist, verwendet werden kann zur Fehlererkennung, Fehlerpropagierung, oder dieses Feld 33 kann Anweisungen enthalten, wohin die Instruktionslistendaten 34 gespeichert werden sollen. Die Instruktionslistendaten 34 können zumindest eine Instruktionsliste oder mehrere Instruktionslisten beinhalten. Nach Abspeicherung der Instruktionsliste oder der Instruktionsliste in dem jeweiligen Datenbusteilnehmer 7a, 7b, ..., 7n kann auch davon gesprochen werden, dass die Programmierung des jeweiligen Datenbusteilnehmers 7a, 7b, ..., 7n erfolgt ist. Die Instruktionslisten weisen dabei Sätze von Instruktionen auf, die die von den Datenbusteilnehmern 7a, 7b, ..., 7n durchzuführende Verarbeitung definieren. Dies ist beispielsweise die Verarbeitung, die mit den Prozessdaten 28a, 28b, 28c eines isochronen Datenpakets 25 durchgeführt werden sollen. Wird das asynchrone Datenpaket 30 vor dem isochronen Datenpaket 25 innerhalb des Zyklusrahmens 17 übertragen, so können die Datenbusteilnehmer 7a, 7b, ..., 7n vor dem Erhalt der Prozessdaten 28a, 28n, 28c programmiert werden, dies kann beispielsweise im gleichen oder in zwei verschiedenen Zyklusrahmen geschehen. D.h. bevor die Prozessdaten 28a, 28b, 28c an den jeweiligen Datenbusteilnehmern 7a, 7b, ..., 7n ankommen, können diese mit Informationen darüber versorgt werden, wie die Prozessdaten 28a, 28b, 28c zu verarbeiten sind. In dem hier gezeigten Ausführungsbeispiel können die Datenbusteilnehmer 7a, 7b, ..., 7n mit dem asynchronen Datenpaket 30 jeweils Instruktionslistendaten 34 gesendet bekommen. Diese Instruktionslistendaten 34 können in den jeweiligen Datenbusteilnehmern 7a, 7b, ..., 7n abgespeichert werden und zwar derart, dass diese über einen Instruktionslistenindex auffindbar sind. Das isochrone Datenpaket 25 beinhaltet einen Instruktionslistenindex 27, der in jedem Datenbusteilnehmer 7a, 7b, ..., 7n jeweils auf genau eine gespeicherte Instruktionsliste hinweist, die zur Verarbeitung der Prozessdaten 28a, 28b, 28c verwendet werden soll.

Auch wenn in dem hier gezeigten Ausführungsbeispiel des asynchronen Datenpakets 30 dieses über das Feld 32 nur an einen Datenbusteilnehmer 7a, 7b, ..., 7n adressiert werden kann, so ist dem Fachmann bewusst, dass das asynchrone Datenpaket 30 auch mehrere Adressen, Broadcast- oder Multicast-Adressen aufweisen kann, so dass die Instruktionslistendaten 34 nicht nur an einen Datenbusteilnehmer 7a, 7b, ..., 7n adressiert werden können, sondern an mehrere Datenbusteilnehmer 7a, 7b, ..., 7n Dem Fachmann ist auch bewusst, dass das hier dargestellte Ausführungsbeispiel des asynchronen Datenpakets 30 nur exemplarisch zu verstehen ist und die Ausgestaltung des asynchronen Datenpakets 30 sich ansonsten nach den Bedürfnissen und Anforderungen des speziellen Lokalbusses richten kann, wo es implementiert wird.

Figur 5 zeigt eine schematische Darstellung eines weiteren asynchronen Datenpakets 35, beispielsweise zum Abfragen mehrerer Datenbusteilnehmer 7a, 7b, ..., 7n ohne dass die laufende Kommunikation unterbrochen werden muss. Das asynchrone Datenpaket 35 kann dabei in einer Abfolge von Datenpaketen der laufenden zyklischen Kommunikation eingebettet werden.

Das asynchrone Datenpaket 35 besteht dabei aus einem allgemeinen Kopfteil, einem Informationsteil und einem Prüfsummenteil. Der Kopfteil beinhaltet ein Feld 36, welches ein eindeutiges Bitmuster MRD enthält, welches auch als Codewort oder Kennung bezeichnet werden kann. Die Datenbusteilnehmer 7a, 7b, ..., 7n haben die Kenntnis, dass wenn das Bitmuster MRD auftritt, Daten aus den Datenbusteilnehmern 7a, 7b, ..., 7n ausgelesen werden sollen. Der Kopf des asynchronen Datenpakets 35 kann auch noch weitere Informationen enthalten, die zur Steuerung oder Fehlererkennung nötig sind - hier nicht gezeigt.

Der Informationsteil des asynchronen Datenpakets 35 beinhaltet in dem hier gezeigten Ausführungsbeispiel zwei Felder 37 und 38, die zur Steuerung verwendet werden können. Diese Felder können beispielsweise angeben welche Information abgefragt werden soll und die Priorität des asynchronen Datenpakets 35 angeben. Es ist dem Fachmann klar, dass im Informationsteil eine beliebige Anzahl oder aber auch keine Steuerfelder enthalten sein können.

Der Master sendet das asynchrone Datenpaket 35 mit einem Bereich, in dem die Datenbusteilnehmer 7a, 7b, ..., 7n jeweils ihre Informationen schreiben können. Im gezeigten Ausführungsbeispiel weist das asynchrone Datenpaket ein erstes Feld 39a auf, in dem die Adresse des Datenbusteilnehmers 7a, 7b, ..., 7n ist. Der zur Adresse zugehörige Datenbusteilnehmer 7a, 7b, ..., 7n, schreibt in das oder die folgenden Felder 39b die zu sendenden Informationen. In dem hier gezeigten Ausführungsbeispiel ist die Adresse in Feld 39a die Adresse des ersten Datenbusteilnehmer 7a. Zusätzlich schreibt dieser in das folgende Feld 39b die zu sendende Information. Informationen eines zweiten Datenbusteilnehmers 7a, 7b, ..., 7n können mit einem weiteren Datenpaket 35' abgefragt werden, welches beispielsweise in Feld 40a die Adresse des zweiten Datenbusteilnehmers 7a, 7b, ..., 7n aufweist von dem Informationen abgefragt werden sollen. Der zweite Datenbusteilnehmers 7a, 7b, ..., 7n kann dann seine zu sendenden Information in das Feld 40b schreiben usw. Dabei muss der zweite Datenbusteilnehmers 7a, 7b, ..., 7n nicht einer sein der dem ersten Datenbusteilnehmer 7a direkt folgt, sondern kann einer sein, der sich an einer beliebigen Stelle nach dem ersten Datenbusteilnehmer befindet, dessen Adresse aber zu der in Feld 40a enthaltenen Adresse passt.

Dem Fachmann ist bewusst, dass das hier dargestellte Ausführungsbeispiel des asynchronen Datenpakets 35 nur exemplarisch zu verstehen ist und die Ausgestaltung des asynchronen Datenpakets 35 sich ansonsten nach den Bedürfnissen und Anforderungen des speziellen Lokalbusses richten kann, wo es implementiert wird.

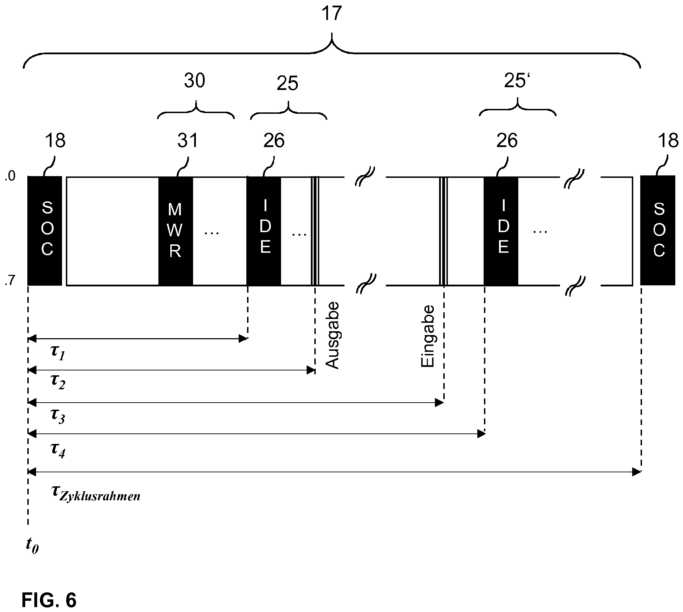

Figur 6 zeigt eine beispielhafte zeitliche Abfolge von asynchronen und isochronen Datenpaketen 25 und 30, wie beispielsweise in den Figuren 3 und 4 gezeigt, innerhalb eines Zyklusrahmens 17, wie beispielsweise in Figur 2 gezeigt. Der Zyklusrahmen 17 sowie die Datenpakete 25, 30, sind einfachheitshalber jeweils nur mit ihren eineindeutigen Bitmustern SOC 18 für den Start des Zyklusrahmens 17, MWR 31 für den Start des asynchronen Datenpakets 30, IDE 26 für den Start des ersten isochronen Datenpakets 25 und IDE 26 für den Start des zweiten isochronen Datenpakets 25 gekennzeichnet. In dem hier gezeigten Ausführungsbeispiel wird vor dem ersten isochronen Datenpaket 25, welches durch das eineindeutige Bitmuster IDE 26 gekennzeichnet ist ein asynchrones Datenpaket 30 gesendet, welches durch das eineindeutige Bitmuster MWR 31 gekennzeichnet ist.

Mit diesem asynchronen Datenpaket 30 können die Datenbusteilnehmer 7a, 7b, ..., 7n programmiert werden, diesen kann also beispielsweise mit dem asynchronen Datenpaket 30 Instruktionslistendaten gesendet werden. Diese Daten können Instruktionslisten beinhalten, wobei jede Instruktion in der Liste angepasst sein kann, eine Verarbeitung der im folgenden isochronen Datenpaket 25 enthaltenen Prozessdaten 28 zu verarbeiten.

In einem zeitlichen Abstand *τ*₁ von dem ersten Bitmuster SOC 18 folgt das Bitmuster IDE 26, welches das isochrone Datenpaket 25 anzeigt. D.h. der Lokalbusmaster 3 sendet beispielsweise zur Zeit *t*₀ das Bitmuster SOC 18 auf den Lokalbus 6 und im zeitlichen Abstand *τ*₁ von *t*₀ aus gesehen sendet der Lokalbusmaster 3 das Bitmuster IDE 26 und folgend die Symbole des isochronen Datenpakets 25. Da die Datenbusteilnehmer 7a, 7b, ..., 7n derart angepasst sind, dass diese die einzelnen Symbole des Zyklusrahmens 17 nur für eine definierte vorher bestimmte Zeit vorliegen haben bevor die Symbole weitergeleitet werden, und wenn diese Zeit an allen Datenbusteilnehmern 7a, 7b, ..., 7n konstant ist, so ändert sich der erste zeitliche Abstand *τ*₁ zwischen dem Bitmuster SOC 18 und dem Bitmuster IDE 26 nicht. D.h. wenn der i-te Datenbusteilnehmer 7i das Bitmuster SOC 18 zur Zeit *τ*ᵢ an den nachfolgenden Datenbusteilnehmer 7i+1 weiterleitet, so wird der Datenbusteilnehmer 7i auch das Bitmuster IDE 26 zur Zeit *τ*ᵢ + *τ*₁ senden usw., wobei i ∈ {a, ...,n} ist. Dabei ist der erste zeitliche Abstand *τ*₁ so vom Lokalbusmaster 3 ermittelt bzw. bestimmt, dass alle Symbole des Datenpakets 25 an den jeweiligen Datenbusteilnehmern 7a, 7b, ..., 7n angekommen sind, vor dem Ausgabezeitpunkt. Der Ausgabezeitpunkt ist ein Zeitpunkt an dem alle Datenbusteilnehmer 7a, 7b, ..., 7n die in dem isochronen Datenpaket 25 enthaltenen Prozessdaten 28 an ihre Ausgänge 14 weiterleiten, beispielsweise an angeschlossene Aktoren 16, und zwar alle Datenbusteilnehmer 7a, 7b, ... 7n gleichzeitig. D.h. der Ausgabezeitpunkt ist ein fester Zeitpunkt, der in einem bestimmten zeitlichen Abstand, hier *τ*₂, von dem Senden des Bitmusters SOC 18 durch den Lokalbusmaster 3 liegt. Der Ausgabezeitpunkt kann dabei beispielweise von dem Lokalbusmaster 3 bestimmt werden. Der Lokalbusmaster 3 ist dabei derart angepasst, dass dieser den ersten zeitlichen Abstand *τ*_{ι}, also den Zeitpunkt wann das isochrone Datenpaket 25 gesendet wird, so wählt, dass alle Datenbusteilnehmer 7a, 7b, ..., 7n ihre Prozessdaten 28 vorliegen haben bevor der Ausgabezeitpunkt erreicht wird. D.h. *τ*₁+ *τ_{Datenpaket}* ≤ *τ*₂, wobei *τ_{Datenpaket}* die Dauer angibt, bis alle Datenbusteilnehmer 7a, 7b, ..., 7n ihre jeweiligen Prozessdaten 28 aus dem isochronen Datenpaket 25 für ihre Ausgänge vorliegen haben. Es ist dem Fachmann bewusst, dass diese Dauer von der Länge des isochronen Datenpakets 25 und/oder von der Anzahl der Datenbusteilnehmer 7a, 7b, ..., 7n im Lokalbus 6 sowie und/oder von der Verteilung der Prozessdaten im isochronen Datenpaket 25 und/oder von einer Dauer der Bereitstellung der Daten innerhalb eines Datenbusteilnehmers abhängig ist. Wenn beispielsweise die Prozessdaten 28 des letzten Datenbusteilnehmers 7n auch als letztes im isochronen Datenpaket 25 übertragen werden, so müssen diese Prozessdaten zunächst alle anderen Datenbusteilnehmer 7a, 7b, ..., 7n-1 durchlaufen bevor diese am letzten Datenbusteilnehmer 7n ankommen. D.h. die anderen Datenbusteilnehmer 7a, 7b, ..., 7n-1 haben bereits vorher ihre Prozessdaten 28 erhalten und müssen warten, bis auch der letzte Datenbusteilnehmer 7n seine Prozessdaten 28 vorliegen hat, bis es zur Ausgabe kommen kann. In diesem Fall entspricht die Dauer *τ_{Datenpaket}* der Zeit, die das isochrone Datenpaket 25 benötig, um den kompletten Lokalbus 6 zu durchlaufen. Es ist dem Fachmann klar, dass wenn die Prozessdaten 28 in umgekehrter Reihenfolge zu der Anordnung der Datenbusteilnehmer 7a, 7b, ..., 7n in dem isochronen Datenpaket 25 enthalten sind, die Dauer *τ_{Datenpaket}* am kürzesten ist. D.h. wenn das isochrone Datenpaket 25 als erstes Prozessdaten 28 für den letzten Datenbusteilnehmer 7n enthält und als letztes Prozessdaten 28 für den Datenbusteilnehmer 7a, so haben in einem Ausführungsbeispiel der Erfindung alle Datenbusteilnehmer 7a, 7b, ..., 7n ihre jeweiligen Prozessdaten 28 zur gleichen Zeit vorliegen und kein Datenbusteilnehmer 7a, 7b, ..., 7n muss warten. Dies ist insbesondere dann vorteilhaft, wenn durch die Datenbusteilnehmer 7a, 7b, ..., 7n kein CRC über das gesamte isochrone Datenpaket 25 durchgeführt werden muss. Der Lokalbusmaster 3 kann durch Kenntnis der Anzahl von Datenbusteilnehmern 7a, 7b, ..., 7n und eventuell durch Kenntnis der Verteilung der Prozessdaten 28 innerhalb des isochronen Datenpakets 25 den ersten zeitlichen Abstand *τ*₁ derart ermitteln und wählen, dass *τ*₁+ *τ_{Datenpaket}* ≤ *τ*₂*.*

Ähnlich zum Ausgabezeitpunkt kann es auch einen festgelegten oder festen Eingabezeitpunkt geben, also einen Zeitpunkt, an dem Prozessdaten 28 an den Eingängen 13 der Datenbusteilnehmer 7a, 7b, ..., 7n vorliegen, beispielsweise von angeschlossenen Sensoren 15. Der Lokalbusmaster 3 kann Kenntnis über diesen Zeitpunkt haben, der von dem Senden des Bitmusters SOC 18 einen dritten Abstand *τ*₃ entfernt ist. Der Lokalbusmaster 3 kann angepasst sein, ein weiteres isochrones Datenpaket 25 auf dem Lokalbus 6 zu senden und zwar in einem vierten zeitlichen Abstand *τ*₄ von dem Bitmuster SOC 18. Dieses weitere isochrone Datenpaket 25 liegt dabei derart an den Datenbusteilnehmern 7a, 7b, ..., 7n vor, dass diese nach der Verarbeitung der Prozessdaten 28 am Eingabezeitpunkt in der Lage sind, die verarbeiteten Prozessdaten 28 in das ihnen jeweils vorliegende Symbol des weiteren isochronen Datenpakets 25 zu schreiben. Somit werden die aufgenommenen Prozessdaten 28 an den Lokalbusmaster 3 übertragen, der diese weiterleiten kann an die SPS 1.

In einer bevorzugten Ausführung werden die Bitmuster 18, 31, 26 durch jeden Datenbusteilnehmer konstant verzögert. Beispielsweise verzögert der ersten Datenbusteilnehmer 7a das Bitmuster SOC 18 um 10 Takte. Der zweite Datenbusteilnehmer 7b empfängt das Bitmuster SOC 18 entsprechend um die konstante Verzögerung (10 Takte) später als der ersten Datenbusteilnehmer 7a. Damit in einer vorteilhaften Ausgestaltung der Erfindung der Ausgabezeitpunkt des ersten Datenbusteilnehmers 7a _mit dem Ausgabezeitpunkt des zweiten Datenbusteilnehmers 7b taktgenau übereinstimmt, unterscheidet sich der zweite Abstand *τ*₂ beim ersten Datenbusteilnehmer 7a und zweiten Datenbusteilnehmer 7b insbesondere um genau diese konstante Verzögerung (10 Takte). Damit in einer vorteilhaften Ausgestaltung der Erfindung der Eingabezeitpunkt des ersten Datenbusteilnehmers 7a mit dem Eingabezeitpunkt des zweiten Datenbusteilnehmers 7b taktgenau übereinstimmt, unterscheidet sich der dritte Abstand *τ*₃ beim ersten Datenbusteilnehmer 7a und zweiten Datenbusteilnehmer 7b insbesondere um genau diese konstante Verzögerung (10 Takte). Entsprechendes gilt für in der Übertragungskette folgenden Datenbusteilnehmer 7c usw.

In dem in Figur 6 gezeigten Ausführungsbeispiel endet der Zyklusrahmen 17 vor einer erneuten Übertragung eines Bitmusters SOC 18, welches den Beginn des folgenden Zyklusrahmens 17 anzeigt.

Auch wenn in dem in Figur 6 gezeigten Ausführungsbeispiel der Ausgabezeitpunkt und der Eingabezeitpunkt als feste Zeiten vorgegeben sind, so ist dem Fachmann bewusst, dass die Ausgabe und die Eingabe nicht zwingend an einem Zeitpunkt geschehen müssen, sondern auch in einer gewissen Zeitspanne erfolgen können, die sich um den Ausgabezeitpunkt bzw. Eingabezeitpunkt herum erstreckt.

Auch wenn in der obigen Beschreibung von Daten die Rede ist, so ist dem Fachmann bewusst, dass hier auch der Singular von Daten, also ein einzelnes Datum, umfasst sein soll.

Die in dem beschriebenen Ausführungsbeispiel als separate Einheiten, Module oder Schnittstellen beschriebenen Bauteile der erfindungsgemäßen Vorrichtung können als separate Hardware implementiert sein, sind jedoch vorzugsweise auf demselben Halbleiterchip integriert. Vorzugsweise ist deren Funktion durch eine Hardware aus Logikgattern implementiert. Zum Beispiel können die Einheiten, Module, oder Schnittstellen auf einem FPGA/ASIC implementiert sein.

### Bezugszeichenliste

- 1: speicherprogrammierbare Steuerung (SPS)
- 2: übergeordneter Bus
- 3: Lokalbusmaster
- 4: erste Schnittstelle
- 5a,b: zweite Schnittstelle
- 6: Ringbus
- 7a, b, n: Datenbusteilnehmer
- 8: Eingangsschnittstelle
- 9: Ausgangsschnittstelle
- 10: Abwärtsdateneingangsschnittstelle
- 11: Abwärtsdatenausgangsschnittstelle
- 12: Verarbeitungseinheit
- 13, 14: Ein-/Ausgänge
- 15: Sensor
- 16: Aktor
- 17: Zyklusrahmen
- 18: SOC Codewort
- 19: Steuerdaten des Zyklusrahmens
- 20, 21: Synchronisationsdaten
- 22: Prüfsumme des Kopfteils des Zyklusrahmens
- 23: Informationsteil des Zyklusrahmens
- 24: Trailer
- 25: isochrones Datenpaket
- 26: IDE Codewort
- 27: Instruktionslistenindex
- 28: Prozessdaten
- 29: Zählerwert
- 30: asynchrones Datenpaket
- 31: MRW Codewort
- 32: Adressfeld
- 33: Steuerdaten des asynchronen Datenpakets
- 34: Instruktionslistendaten
- 35: weiteres asynchrones Datenpaket
- 36: MRD Codewort
- 37, 38: Steuerdaten des weiteren asynchronen Datenpakets
- 39a: erstes Adressfeld
- 39b: erstes Datenfeld
- 40a: zweites Adressfeld
- 40b: zweites Datenfeld

## Patentansprüche

1. Ein Verfahren zum Betrieb eines Lokalbusses (6), insbesondere eines Ringbusses, mit Datenbusteilnehmern (7a, 7b, ..., 7n), das Verfahren aufweisend:
Übertragen einer ersten Kennung (18) eines Zyklusrahmens (17), wobei die erste Kennung (18) den Beginn des Zyklusrahmens (17) definiert;
Übertragen von Prozessdaten (28) und Managementdaten (34, 39b, 40b) über den Lokalbus (6), wobei die Prozessdaten (28) und Managementdaten (34, 39b, 40b) innerhalb des Zyklusrahmens (17) übertragen werden,
wobei in einem ersten zeitlichen Abstand, *τ*₁, zur ersten Kennung (18) zumindest ein isochrones Datenpaket (25) übertragen wird, welches die Prozessdaten (28) beinhaltet, wobei das isochrone Datenpaket (25) eine zweite Kennung (26) aufweist, die unterschiedlich ist zur ersten Kennung (18), und
wobei wenn innerhalb des Zyklusrahmens (17) Managementdaten (34, 39b, 40b) übertragen werden, diese Managementdaten (34, 39b, 40b) disjunkt zu den Prozessdaten (28) in zumindest einem asynchronen Datenpaket (30, 35) übertragen werden, wobei das zumindest eine asynchrone Datenpaket (30, 35) eine dritte Kennung (31, 36) aufweist, die unterschiedlich ist zur ersten und zweiten Kennung (18, 26), und
wobei die erste, zweite und dritte Kennung (18, 26, 31, 36) jeweils eine eineindeutige Kennung ist.

2. Das Verfahren nach Anspruch 1, weiter aufweisend: Ermitteln des ersten zeitlichen Abstandes, *τ*₁.

3. Das Verfahren nach einem der vorhergehenden Ansprüche, wobei ein Ausgabezeitpunkt, der ein Ausgeben von Prozessdaten (25) an einem Ausgang (14) der Datenbusteilnehmer (7a, 7b, ..., 7n) festlegt, in einem zweiten zeitlichen Abstand, *τ*₂, zur ersten Kennung (18) vorgegeben ist.

4. Das Verfahren nach Anspruch 3, wobei der erste zeitliche Abstand, *τ*₁, basiert auf dem Ausgabezeitpunkt und einer Länge des zumindest einen isochronen Datenpakets (25).

5. Das Verfahren nach einem der vorhergehenden Ansprüche, wobei ein Eingabezeitpunkt, der eine Eingabe von Prozessdaten (28) an einem Eingang (13) der Datenbusteilnehmer (7a, 7b, ..., 7n) festlegt, in einem dritten zeitlichen Abstand, *τ*₃, zur ersten Kennung (18) vorgegeben ist.

6. Das Verfahren nach Anspruch 5, weiter aufweisend:
Übertragen zumindest eines weiteren isochronen Datenpakets (25) im Zyklusrahmen (17) in einem vierten zeitlichen Abstand, *τ*₄, zur ersten Kennung (18), wobei der vierte zeitliche Abstand, *τ*₄, basiert auf dem Eingabezeitpunkt.

7. Ein Lokalbusmaster (3) eines Lokalbusses (6), insbesondere eines Ringbusses, mit Datenbusteilnehmern (7a, 7b, ..., 7n), wobei der Lokalbusmaster (3) aufweist:
ein Mittel zum Senden einer ersten Kennung (18) eines Zyklusrahmens (17), wobei die erste Kennung (18) den Beginn des Zyklusrahmens (17) definiert;
wobei das Mittel zum Senden angepasst ist, Prozessdaten (28) und Managementdaten (34, 39b, 40b) über den Lokalbus (6) zu senden, wobei die Prozessdaten (28) und Managementdaten (34, 39b, 40b) innerhalb des Zyklusrahmens (17) übertragbar sind;
wobei das Mittel zum Senden angepasst ist, in einem ersten zeitlichen Abstand, *τ*₁, zur ersten Kennung (18) zumindest ein isochrones Datenpaket (25) zu senden, welches die Prozessdaten (28) beinhaltet, wobei das isochrone Datenpaket (25) eine zweite Kennung (26) aufweist, die unterschiedlich ist zur ersten Kennung (18) und
wobei das Mittel zum Senden angepasst ist, Managementdaten (34, 39b, 40b) disjunkt zu den Prozessdaten (28) in zumindest einem asynchronen Datenpaket (30, 35) zu senden, wenn innerhalb des Zyklusrahmens (17) Managementdaten (34, 39b, 40b) zu übertragen sind, wobei das zumindest eine asynchrone Datenpaket (30, 35) eine dritte Kennung (31, 36) aufweist, die unterschiedlich ist zur ersten und zweiten Kennung (18, 26), und
wobei die erste, zweite und dritte Kennung (18, 26, 31, 36) jeweils eine eineindeutige Kennung ist.

8. Der Lokalbusmaster (3) nach Anspruch 7, weiter aufweisend:
ein Mittel zum Ermitteln des ersten zeitlichen Abstandes, *τ*₁, basierend auf einem Ausgabezeitpunkt, der ein Ausgeben von Prozessdaten (28) an einem Ausgang (14) der Datenbusteilnehmer (7a, 7b, ..., 7n) festlegt, wobei der Ausgabezeitpunkt in einem zweiten zeitlichen Abstand, *τ*₂, zur ersten Kennung (18) vorgegeben ist.

9. Der Lokalbusmaster (3) nach einem der Ansprüche 7 bis 8, weiter aufweisend:
ein Mittel zum Ermitteln eines vierten zeitlichen Abstandes, *τ*₄, zur ersten Kennung (18) basierend auf einem Eingabezeitpunkt, der eine Eingabe von Prozessdaten (28) an einem Eingang (13) der Datenbusteilnehmer (7a, 7b, ..., 7n) festlegt, wobei der Eingabezeitpunkt in einem dritten zeitlichen Abstand, *τ*₃, zur ersten Kennung (18) vorgegeben ist; und
wobei das Mittel zum Senden angepasst ist, zumindest ein weiteres isochrones Datenpaket (25) im Zyklusrahmen (17) in dem vierten zeitlichen Abstand, *τ*₄, zur ersten Kennung (18) zu senden.

10. Der Lokalbusmaster (3) nach einem der Ansprüche 7 bis 9, weiter aufweisend:
ein Mittel zum Empfangen von Prozessdaten (28) in einem Zyklusrahmen (17).

## Claims

1. A method for operating a local bus (6), in particular a ring bus, with data bus participants (7a, 7b, ..., 7n), the method comprising:
transmitting a first identifier (18) of a cycle frame (17), wherein the first identifier (18) defines the beginning of the cycle frame (17);
transmitting process data (28) and management data (34, 39b, 40b) over the local bus (6), wherein the process data (28) and management data (34, 39b, 40b) are transmitted within the cycle frame (17), wherein
in a first time interval, τ₁, from the first identifier (18) at least one isochronous data packet (25) containing the process data (28) is transmitted, wherein the isochronous data packet (25) comprises a second identifier (26) which is different from the first identifier (18), and wherein when management data (34, 39b, 40b) is transmitted within the cycle frame (17), said management data (34, 39b, 40b) is transmitted separately from the process data (28) in at least one asynchronous data packet (30, 35), wherein said at least one asynchronous data packet (30, 35) comprises a third identifier (31, 36) that is different from the first and second identifier (18, 26); and
wherein the first, second and third identifiers (18, 26, 31, 36) are each a unique identifier.

2. The method of claim 1, further comprising:
determining the first time interval, τ₁.

3. The method according to any one of the preceding claims, wherein an output point of time, which defines an output of process data (25) at an output (14) of the data bus participants (7a, 7b, ..., 7n), is predetermined in a second time interval, τ₂, from the first identifier (18).

4. The method according to claim 3, wherein the first time interval, τ₁, is based on the output point of time and a length of the at least one isochronous data packet (25).

5. The method according to any one of the preceding claims, wherein an input point of time, which defines an input of process data (28) at an input (13) of the data bus participants (7a, 7b, ..., 7n), is predetermined in a third time interval, τ₃, from the first identifier (18).

6. The method according to claim 5, further comprising:
transmitting at least one further isochronous data packet (25) in the cycle frame (17) in a fourth time interval, τ₄, from the first identifier (18), wherein the fourth time interval, τ₄, is based on the input point of time.

7. A local bus master (3) of a local bus (6), in particular of a ring bus, with data bus participants (7a, 7b, ..., 7n), the local bus master (3) comprising:
a means for transmitting a first identifier (18) of a cycle frame (17), wherein the first identifier (18) defines the beginning of the cycle frame (17); wherein the means for transmitting is adapted for transmitting process data (28) and management data (34, 39b, 40b) over the local bus (6), wherein the process data (28) and management data (34, 39b, 40b) are transmittable within the cycle frame (17); wherein the means for transmitting is adapted for transmitting, in a first time interval, τ₁, from the first identifier (18), at least one isochronous data packet (25) containing the process data (28), wherein the isochronous data packet (25) comprises a second identifier (26) which is different from the first identifier (18), and wherein the means for transmitting is adapted for transmitting management data (34, 39b, 40b) separately from the process data (28) in at least one asynchronous data packet (30, 35), when management data (34, 39b, 40b) is to be transmitted within the cycle frame (17), wherein said at least one asynchronous data packet (30, 35) comprises a third identifier (31, 36) that is different from the first and second identifier (18, 26); and
wherein the first, second and third identifiers (18, 26, 31, 36) are each a unique identifier.

8. The local bus master (3) of claim 7, further comprising:
a means for determining the first time interval, τ₁, based on an output point of time, which defines an output of process data (28) at an output (14) of the data bus participants (7a, 7b, ..., 7n), wherein the output point of time is predetermined in a second time interval, τ₂, from the first identifier (18).

9. The local bus master (3) according to any one of claims 7 to 8, further comprising:
a means for determining a fourth time interval, τ₄, from the first identifier (18) based on an input point of time, which defines an input of process data (28) at an input (13) of the data bus participants (7a, 7b, ..., 7n), wherein the input point of time is predetermined in a third time interval, τ₃, from the first identifier (18); and
wherein the means for transmitting is adapted for transmitting at least one further isochronous data packet (25) in the cycle frame (17) in the fourth time interval, τ₄, from the first identifier (18).

10. The local bus master (3) according to any one of claims 7 to 9, further comprising:
a means for receiving process data (28) in a cycle frame (17).

## Revendications

1. Procédé pour faire fonctionner un bus local (6), en particulier un bus circulaire, avec des utilisateurs du bus de données (7a, 7b, ..., 7n), le procédé comprenant :
la transmission d'un premier identifiant (18) d'un schéma cyclique (17), dans lequel le premier identifiant (18) définit le début du schéma cyclique (17) ;
la transmission de données de processus (28) et de données de gestion (34, 39b, 40b) par l'intermédiaire du bus local (6), dans lequel les données de processus (28) et les données de gestion (34, 39b, 40b) sont transmises à l'intérieur du schéma cyclique (17),
dans lequel est transmis, dans un premier intervalle de temps, τ1, par rapport au premier identifiant (18), au moins un paquet de données isochrone (25), lequel comporte les données de processus (28), dans lequel le paquet de données isochrone (25) comprend un deuxième identifiant (26) qui est différent par rapport au premier identifiant (18), et
dans lequel, lorsque des données de gestion (34, 39b, 40b) sont transmises au sein du schéma cyclique (17), lesdites données de gestion (34, 39b, 40b) sont transmises de manière disjointe par rapport aux données de processus (28) en au moins un paquet de données asynchrone (30, 35), dans lequel l'au moins un paquet de données asynchrone (30, 35) comprend un troisième identifiant (31, 36) qui est différent par rapport au premier et au deuxième identifiant (18, 26), et
dans lequel le premier, le deuxième et le troisième identifiant (18, 26, 31, 36) sont chacun un identifiant biunivoque.

2. Procédé selon la revendication 1, comprenant par ailleurs : la détermination du premier intervalle de temps, τ₁.

3. Procédé selon l'une des revendications précédentes, dans lequel un moment de sortie, qui fixe une sortie de données de processus (25) sur une sortie (14) des utilisateurs du bus de données (7a, 7b, ..., 7n), est spécifié dans un deuxième intervalle de temps, τ₂, par rapport au premier identifiant (18).

4. Procédé selon la revendication 3, dans lequel le premier intervalle de temps, τ₁, est basé sur le moment de sortie et sur une longueur de l'au moins un paquet de données isochrone (25).

5. Procédé selon l'une des revendications précédentes, dans lequel un moment de saisie, qui fixe une saisie de données de processus (28) sur une entrée (13) des utilisateurs du bus de données (7a, 7b, ..., 7n), est spécifié dans un troisième intervalle de temps, τ₃, par rapport au premier identifiant (18).

6. Procédé selon la revendication 5, comprenant par ailleurs :
la transmission d'au moins un autre paquet de données isochrone (25) dans le schéma cyclique (17) dans un quatrième intervalle de temps, τ₄, par rapport au premier identifiant (18), dans lequel le quatrième intervalle de temps, τ₄, est basé sur le moment de saisie.

7. Maître de bus local (3) pour un bus local (6), en particulier d'un bus circulaire, avec des utilisateurs du bus de données (7a, 7b, ..., 7n), dans lequel le maître de bus local (3) comprend :
un moyen pour envoyer un premier identifiant (18) d'un schéma cyclique (17),
dans lequel le premier identifiant (18) définit le début du schéma cyclique (17) ;
dans lequel le moyen d'envoi est adapté pour envoyer des données de processus (28) et des données de gestion (34, 39b, 40b) par l'intermédiaire du bus local (6), dans lequel les données de processus (28) et les données de gestion (34, 39b, 40b) peuvent être transmises au sein du schéma cyclique (17) ;
dans lequel le moyen d'envoi est adapté pour envoyer, dans un premier intervalle de temps, τ₁, par rapport au premier identifiant (18), au moins un paquet de données isochrone (25), lequel comporte les données de processus (28), dans lequel le paquet de données isochrone (25) comprend un deuxième identifiant (26) qui est différent par rapport au premier identifiant (18) et
dans lequel le moyen d'envoi est adapté pour envoyer des données de gestion (34, 39b, 40b) de manière disjointe par rapport aux données de processus (28) dans au moins un paquet de données asynchrone (30, 35), quand des données de gestion (34, 39b, 40b) sont à transmettre au sein du schéma cyclique (17), dans lequel l'au moins un paquet de données asynchrone (30, 35) comprend un troisième identifiant (31, 36) qui est différent par rapport au premier et au deuxième identifiant (18, 26), et
dans lequel le premier, le deuxième et le troisième identifiant (18, 26, 31, 36) sont chacun un identifiant biunivoque.

8. Maître de bus local (3) selon la revendication 7, comprenant par ailleurs :
un moyen pour déterminer le premier intervalle de temps, τ₁, sur la base d'un moment de sortie, qui fixe une sortie de données de processus (28) sur une sortie (14) des utilisateurs du bus de données (7a, 7b, ..., 7n), dans lequel le moment de sortie est spécifié dans un deuxième intervalle de temps, τ₂, par rapport au premier identifiant (18).

9. Maître de bus local (3) selon l'une des revendications 7 à 8, comprenant par ailleurs :
un moyen pour déterminer un quatrième intervalle de temps, τ₄, par rapport au premier identifiant (18) sur la base d'un moment de saisie, qui fixe une saisie de données de processus (28) sur une entrée (13) des utilisateurs du bus de données (7a, 7b, ..., 7n), dans lequel le moment de saisie est spécifié dans un troisième intervalle de temps, τ₃, par rapport au premier identifiant (18) ; et
dans lequel le moyen d'envoi est adapté pour envoyer au moins un autre paquet de données isochrone (25) dans le schéma cyclique (17) dans le quatrième intervalle de temps, τ₄, par rapport au premier identifiant (18).

10. Maître de bus local (3) selon l'une des revendications 7 à 9, comprenant par ailleurs :
un moyen pour recevoir des données de processus (28) dans un schéma cyclique (17).
